# EUROPÄISCHE PATENTSCHRIFT

(11) **EP 0 558 450 B1**
(45) Veröffentlichungstag und Bekanntmachung des Hinweises auf die Patenterteilung: **17.03.1999**
(21) Anmeldenummer: 93810101.1
(22) Anmeldetag: 18.02.1993
(51) Int. Cl.: C09B 67/00, D06P 3/32

(54) **Verfahren zum Färben von Leder mit Farbstoffmischungen**
Process for dyeing leather with mixtures of dyes
Procédé pour teindre du cuir avec des mélanges de colorants

(30) Priorität: 28.02.1992 CH 622/92
(43) Veröffentlichungstag der Anmeldung: 01.09.1993
(73) Patentinhaber: Ciba Specialty Chemicals Holding Inc., 4057 Basel (CH)
(72) Erfinder: Page, Campbell, Dr., CH-4051 Basel (CH); Moser, Peter, Dr., CH-4102 Binningen (CH); Püntener, Alois, Dr., CH-4310 Rheinfelden (CH)

(56) Entgegenhaltungen:
- EP-A- 0 012 283
- EP-A- 0 433 229
- EP-A- 0 524 520
- CH-A- 174 541
- CH-A- 175 893
- DE-A- 1 794 288
- FR-A- 810 605
- FR-A- 2 032 391
- FR-A- 2 160 473
- 'Colour Index.' 1971 , THE SOCIETY OF DYERS AND COLORISTS , BRADFORD YORKSHIRE G.B.

## Beschreibung

Die vorliegende Erfindung betrifft ein Verfahren zum Färben von Leder mit Farbstoffmischungen, insbesondere ein Verfahren zum Trichromiefärben von Leder, sowie das nach dem Verfahren gefärbte Leder.

Verfahren zum Färben von Leder mit Farbstoffmischungen, auch das Trichromiefärben von Leder, sind bereits bekannt und werden auch in der Praxis mit grossem Erfolg angewendet. Die bekannten Farbstoffmischungen sind jedoch zum Färben in brillanten Farbtönen nur bedingt geeignet und das Trichromiefärben in brillanten Tönen ist mit den bekannten Farbstoffmischungen bisher nicht möglich. Beim Trichromiefärben werden nämlich besondere Anforderungen an die Kombinierbarkeit der verwendeten Farbstoffe gestellt, um einen gleichmässigen Farbaufbau zur Erzielung nuancenkonstanter, reproduzierbarer Färbungen in unterschiedlichen Konzentrationen zu gewährleisten. Ausserdem sollten die genannten Bedingungen für Ledersorten verschiedener Herkunft und unterschiedlicher Vorbehandlung erfüllt sein.

Der vorliegenden Erfindung lag die Aufgabe zugrunde, ein Verfahren zum Färben von Leder mit Farbstoffmischungen zur Verfügung zu stellen, nach dem das Färben in brillanten Nuancen möglich ist. Besonders geeignete Farbstoffmischungen sollten darüber hinaus auch das Trichromiefärben von Leder in brillanten Tönen ermöglichen.

Diese Aufgabe wird durch das erfindungsgemässe Verfahren gelöst.

Gegenstand der Erfindung ist somit ein Verfahren zum Färben von Leder mit Farbstoffmischungen, welches dadurch gekennzeichnet ist, dass man mindestens zwei metallfreie Farbstoffe mit jeweils zwei Sulfo- oder Carboxygruppen und einem Molekulargewicht zwischen 790 und 1100 einsetzt.

Eine bevorzugte Ausführungsform des erfindungsgemässen Verfahrens besteht darin, dass man mindestens zwei Farbstoffe verwendet, ausgewählt aus der Gruppe, bestehend aus
a) einem gelben Farbstoff der Formel 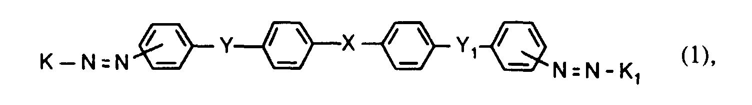 worin
   Y und Y₁ unabhängig voneinander je -SO₂O-, -COO-, -CONH- oder -SO₂NH-, X -C₁-C₄-Alkylen-, -CH=CH-, -O-, -S-, -SO₂-, -NH-, 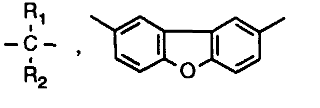 oder 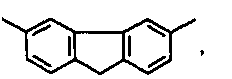 wobei R₁ und R₂ unabhängig voneinander je C₁-C₄-Alkyl bedeuten, und
   K und K₁ unabhängig voneinander je eine Kupplungskomponente der Formel 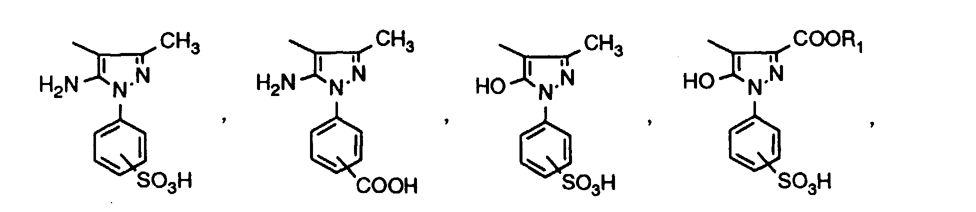 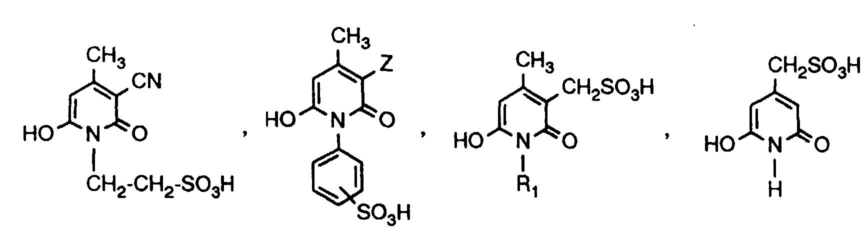 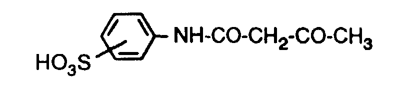 bedeuten, worin Z CN, COOH, COONH₂ oder COOR₁ bedeutet,
b) einem roten Farbstoff der Formel 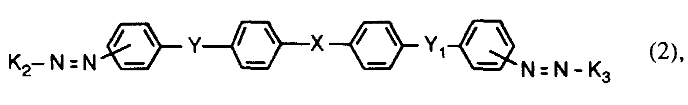 worin K₂ und K₃ unabhängig voneinander je eine Kupplungskomponente der Formel 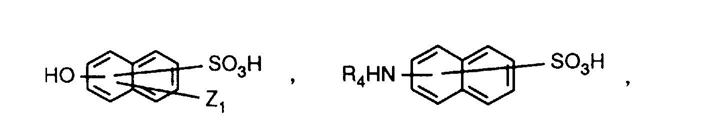 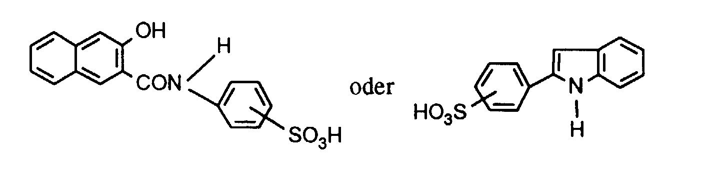 bedeuten, worin Z₁ Wasserstoff, OH oder NHR₃ ist, wobei R₃ Wasserstoff, C₁-C₄-Alkyl, Cyan-C₂-C₄-Alkyl, C₁-C₄-Alkylcarbonyl, Aminocarbonyl, Phenylcarbonyl oder Phenyl bedeutet, wobei die Phenylgruppe in den beiden letzgenannten Resten durch C₁-C₄-Alkyl substituiert sein kann, und
   R₄ Wasserstoff oder Phenyl bedeutet,
   und
c) einem blauen Farbstoff der Formel 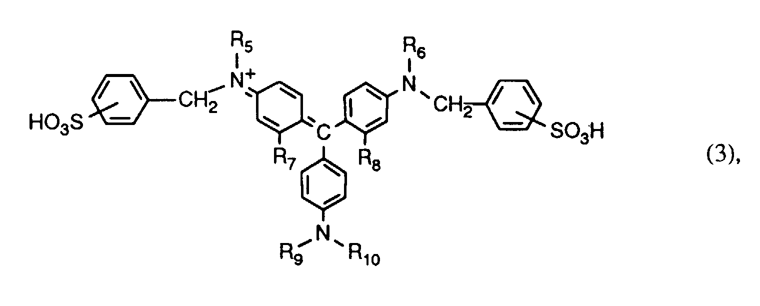 worin
   R₅, R₆, R₇, R₈ und R₉ unabhängig voneinander je Wasserstoff oder C₁-C₄-Alkyl sind und
   R₁₀ Wasserstoff, Phenyl oder durch C₁-C₄-Alkyl oder C₁-C₄-Alkoxy substituiertes Phenyl bedeutet, oder der Formel 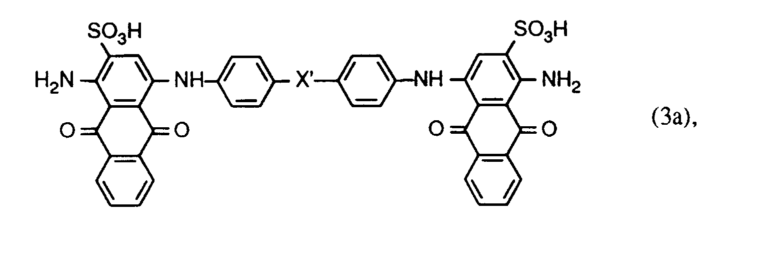 worin X' -C₁-C₄-Alkylen-, -CH=CH-, -O-, -S-, -SO₂-, -NH-, 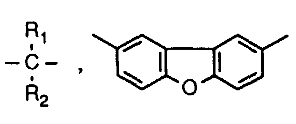 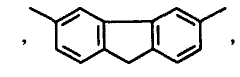 -NH-CO-, -NH-SO₂- oder -NH-CO-NH- ist, wobei R₁ und R₂ unabhängig voneinander je C₁-C₄-Alkyl bedeuten.

Die Alkyl- und Alkylengruppen können linear oder verzweigt sein. Als C₁-C₄-Alkyl kommen somit Methyl, Ethyl, n- oder iso-Propyl sowie n-, iso-, sec.- oder tert.-Butyl in Betracht, Bevorzugt unter diesen sind Methyl und Ethyl.

Als Alkylengruppen kommen vorzugsweise unverzweigte Reste in Frage. Es handelt sich beispielsweise um Methylen, Ethylen, n-Propylen oder n-Butylen.

Geeignete Alkoxyreste sind z.B. Methoxy, Ethoxy, Propoxy, iso-Propoxy, n-Butoxy, iso-Butoxy oder tert.-Butoxy, vorzugsweise jedoch Methoxy oder Ethoxy.

Zum Trichromiefärben nach dem erfindungsgemässen Verfahren verwendet man vorzugsweise eine Farbstoffmischung, enthaltend einen gelben Farbstoff der Formel (1), einen roten Farbstoff der Formel (2) und einen blauen Farbstoff der Formel (3) oder (3a).

Bei den Farbstoffen der Formel (1) bedeutet Y vorzugsweise das gleiche wie Y₁, insbesondere bedeuten beide je -SO₂O-.

Ausserdem ist die Verwendung solcher Farbstoffe der Formel (1) bevorzugt, worin X 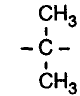 bedeutet.

Die Kupplungskomponenten K und K₁ sind bei den Farbstoffen der Formel (1) vorzugsweise gleich und vor allem bedeuten K und K₁ je eine Kupplungskomponente der Formel

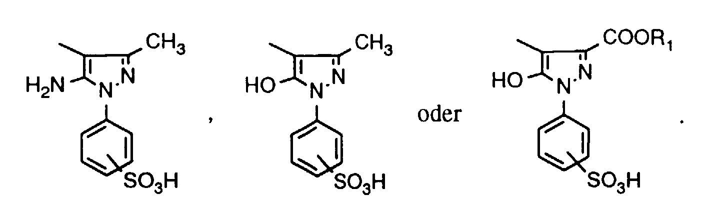

Besonders bevorzugt ist die Verwendung solcher Farbstoffe der Formel (1), worin K und K₁ je eine Kupplungskomponente der Formel 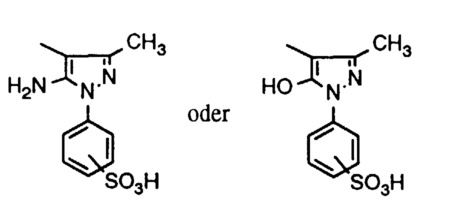 bedeutet,

Eine besonders bevorzugte Ausführungsform des erfindungsgemässen Verfahrens besteht darin, dass man den gelben Farbstoff der Formel 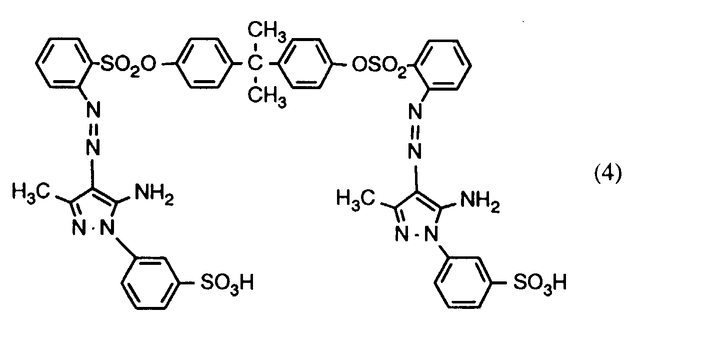 verwendet.

Eine weitere bevorzugte Ausführungsform des erfindungsgemässen Verfahrens ist dadurch gekennzeichnet, dass man einen roten Farbstoff der Formel (2) verwendet, worin Y das gleiche bedeutet wie Y₁, vorzugsweise beide -SO₂O-.

Ausserdem ist die Verwendung solcher Farbstoffe der Formel (2) bevorzugt, worin X 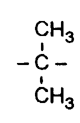 bedeutet.

Die Kupplungskomponenten K₂ und K₃ sind bei den Farbstoffen der Formel (2) vorzugsweise gleich und vor allem bedeuten K₂ und K₃ je eine Kupplungskomponente der Formel 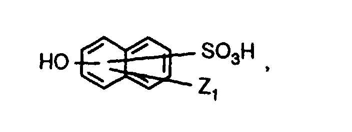 worin Z₁ Wasserstoff, OH oder NHR₃ ist, wobei R₃ Wasserstoff, C₁-C₄-Alkyl, Cyan-C₂-C₄-Alkyl, C₁-C₄-Alkylcarbonyl, Aminocarbonyl, Phenylcarbonyl oder Phenyl bedeutet, wobei die Phenylgruppe in den beiden letzgenannten Resten durch C₁-C₄-Alkyl substituiert sein kann.

Weitere bevorzugte Ausführungsformen des erfindungsgemässen Verfahrens sind dadurch gekennzeichnet, dass man einen roten Farbstoff der Formel (2) verwendet, worin K₂ und K₃ je eine Kupplungskomponente der Formel 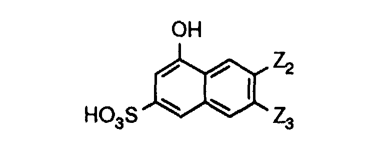 bedeuten, wobei von den Substituenten Z₂ und Z₃ der eine Wasserstoff und der andere NHR₃ bedeutet, wobei R₃ Wasserstoff, C₁-C₄-Alkyl, Cyan-C₂-C₄-Alkyl, C₁-C₄-Alkylcarbonyl, Aminocarbonyl, Phenylcarbonyl oder Phenyl bedeutet, wobei die Phenylgruppe in den beiden letzgenannten Resten durch C₁-C₄-Alkyl substituiert sein kann.

Unter diesen sind solche Verfahren besonders bevorzugt, die dadurch gekennzeichnet sind, dass man einen roten Farbstoff der Formel (2) verwendet, worin K₂ und K₃ je eine Kupplungskomponente der Formel 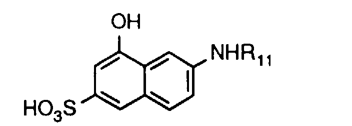 bedeuten, worin R₁₁ Wasserstoff, C₁-C₄-Alkyl, Cyan-C₂-C₄-Alkyl, C₁-C₄-Alkylcarbonyl, Phenylcarbonyl, Phenyl oder durch C₁-C₄-Alkyl substituiertes Phenyl bedeutet oder worin K₂ und K₃ je eine Kupplungskomponente der Formel 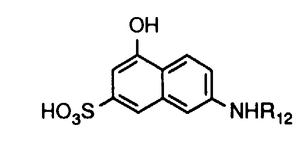 bedeuten, worin R₁₂ Wasserstoff, C₁-C₄-Alkyl, Aminocarbonyl, C₁-C₄-Alkylcarbonyl oder Phenylcarbonyl bedeutet.

Eine ganz besonders bevorzugte Ausführungsform des erfindungsgemässen Verfahrens besteht darin, dass man den roten Farbstoff der Formel 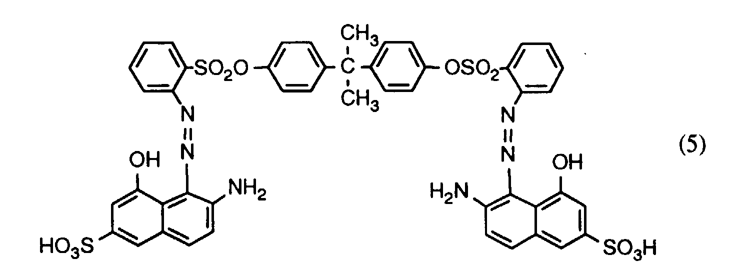 verwendet.

Eine weitere bevorzugte Ausführungsform des erfindungsgemässen Verfahrens ist dadurch gekennzeichnet, dass man einen blauen Farbstoff der Formel (3) verwendet, worin R₅, R₆, R₇, R₈ und R₉ unabhängig voneinander je Wasserstoff oder C₁-C₂-Alkyl und R₁₀ Wasserstoff, Phenyl oder durch C₁-C₂-Alkyl oder C₁-C₂-Alkoxy substituiertes Phenyl bedeutet, oder der Formel (3a), worin X' -C₁-C₄-Alkylen-, -CH=CH-, 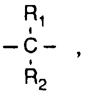 -NH-CO- oder -NH-CO-NH- ist, wobei R₁ und R₂ unabhängig voneinander je C₁-C₄-Alkyl bedeuten.

Ausserdem ist die Verwendung solcher Farbstoffe der Formel (3) bevorzugt, worin R₅ und R₆ unabhängig voneinander je C₁-C₂-Alkyl, R₇ und R₈ unabhängig voneinander je Wasserstoff oder C₁-C₂-Alkyl, R₉ Wasserstoff und R₁₀ Phenyl oder durch C₁-C₂-Alkyl oder C₁-C₂-Alkoxy substituiertes Phenyl bedeutet, oder solcher Farbstoffe der Formel (3a), worin X' -C₁-C₄-Alkylen- oder 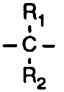 ist, wobei R₁ und R₂ unabhängig voneinander je C₁-C₄-Alkyl bedeuten.

Eine ganz besonders bevorzugte Ausführungsform des erfindungsgemässen Verfahrens besteht darin, dass man den blauen Farbstoff der Formel 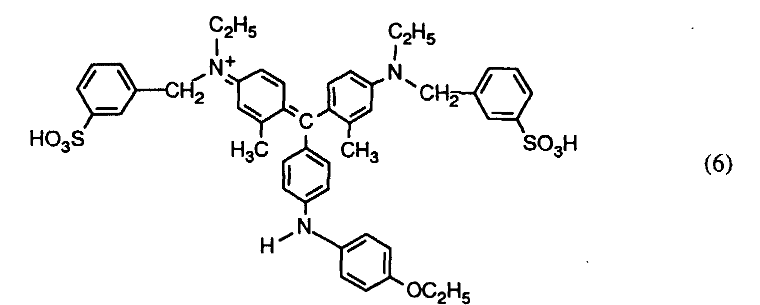 oder der Formel 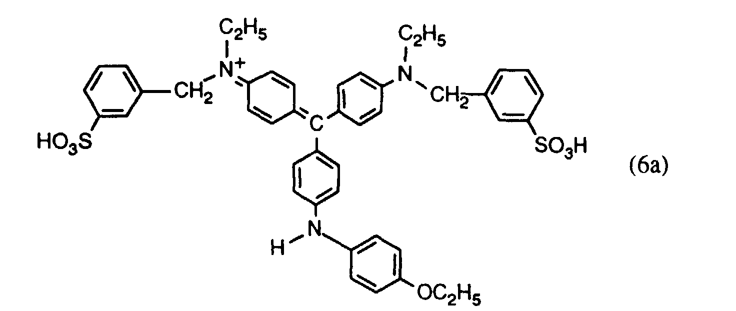 oder der Formel 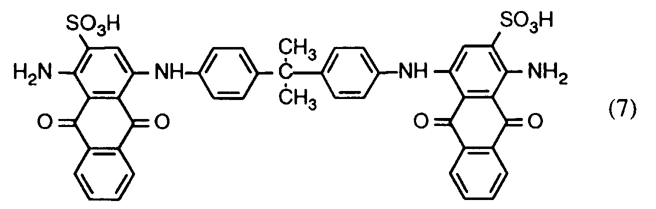 oder der Formel 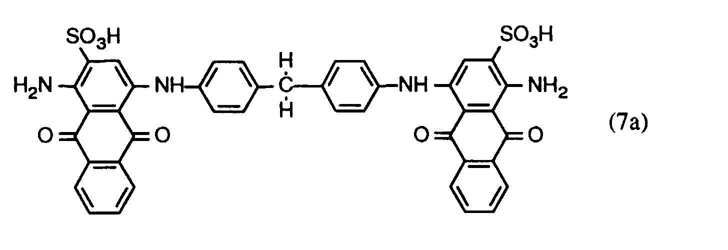 verwendet.

Ausserdem ist es bevorzugt, im erfindungsgemässen Verfahren mindestens zwei Farbstoffe zu verwenden, deren Parachor zwischen 1750 und 2200 liegt und deren log P zwischen -1 und 1 liegt. Der Parachor wird dabei gemäss dem Artikel von O. R. Quayle [Chem. Rev. 53 439 (1953)] berechnet und log P bedeutet die relative Lipophilität, deren Berechnung von C. Hansch et al. [J. Med. Chem. 16, 1207 (1973)] beschrieben wurde. Bei den Farbstoffen der Formel (3) wird der Einfluss der Ladung des Farbstoffkations nicht berücksichtigt, was um 6 log Einheiten höhere log P-Werte ergibt.

Eine ganz besonders wichtige Ausführungsform des erfindungsgemässen Verfahrens besteht darin, dass man zum Trichromiefärben eine Farbstoffmischung, enthaltend den gelben Farbstoff der Formel (4), den roten Farbstoff der Formel (5) und den blauen Farbstoff der Formel (6) oder (7), verwendet.

Zusätzlich zu den Farbstoffen der Formeln (1), (2), (3) oder (3a) kann man im erfindungsgemässen Färbeverfahren noch weitere Farbstoffe einsetzen. Dies kann z.B. zweckmässig sein, wenn die mit den genannten Farbstoffen erreichbare Nuance trüber oder dunkler oder in etwas geändertem Farbton ausfallen soll. Vorzugsweise setzt man als weitere Farbstoffe solche ein, die ebenfalls zwei Sulfo- oder Carboxygruppen und ein Molekulargewicht zwischen 790 und 1100 aufweisen.

Wegen der guten Kombinierbarkeit mit den Farbstoffen der Formeln (1), (2), (3) oder (3a) verwendet man als zusätzliche Farbstoffe vor allen Dingen orangene Farbstoffe der Formel 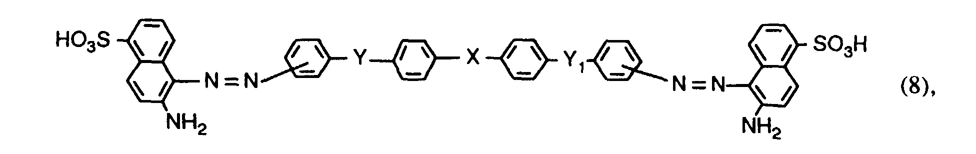 worin Y und Y₁ unabhängig voneinander je -SO₂O-, -COO-, -CONH- oder -SO₂NH- und X -C₁-C₄-Alkylen-, -CH=CH-, -O-, -S-, -SO₂-, -NH-, 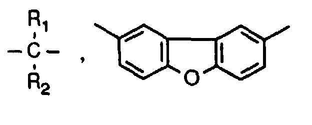 oder 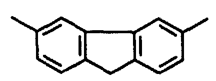 bedeuten,
wobei R₁ und R₂ unabhängig voneinander je C₁-C₄-Alkyl bedeuten, oder braune Farbstoffe der Formel 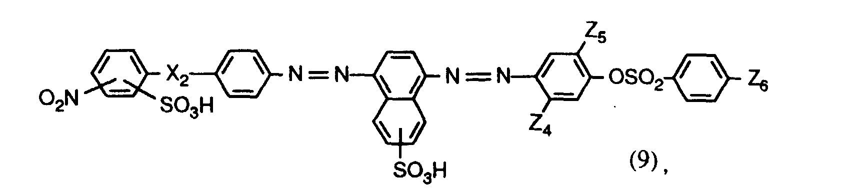 worin X₂ -NH- oder -O-, Z₄ und Z₅ unabhängig voneinander je Wasserstoff, Methyl, Methoxy oder Chlor und Z₆ Wasserstoff oder Methyl bedeuten, wobei die Sulfogruppe am Naphthalinkern in 6- oder 7-Stellung angeordnet ist, oder braune Farbstoffe der Formel 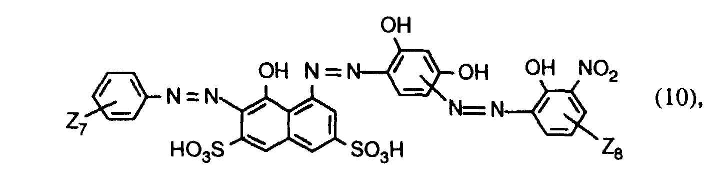 worin Z₇ Wasserstoff, Methyl, Chlor oder Nitro und Z₈ Nitro oder Sulfo bedeutet, oder den braunen Farbstoff der Formel 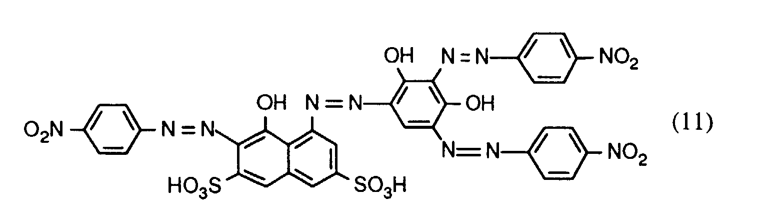 oder schwarze Farbstoffe der Formel 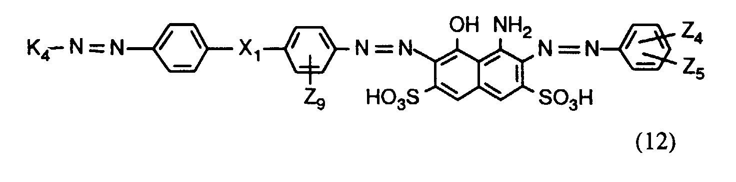 oder 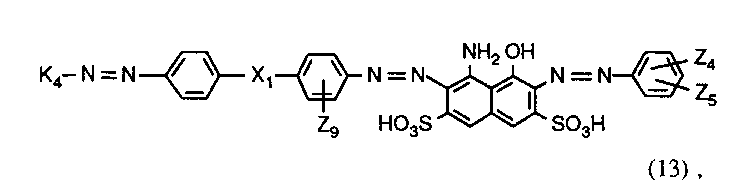 worin K₄ eine Kupplungskomponente der Formel 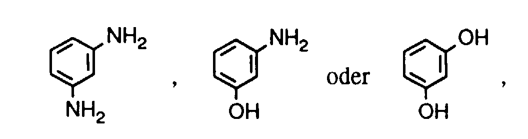
X₁ -NHSO₂-, -CH₂-, -NHCO-, -O-, -S-, -NH- oder -SO₂-,
Z₄ Wasserstoff, NO₂ oder Cl,
Z₅ Wasserstoff oder, falls Z₄ Cl ist, Wasserstoff oder Cl und
Z₉ Wasserstoff oder Sulfo bedeutet.

Als zusätzliche Farbstoffe verwendet man vorzugsweise den orangen Farbstoff der Formel 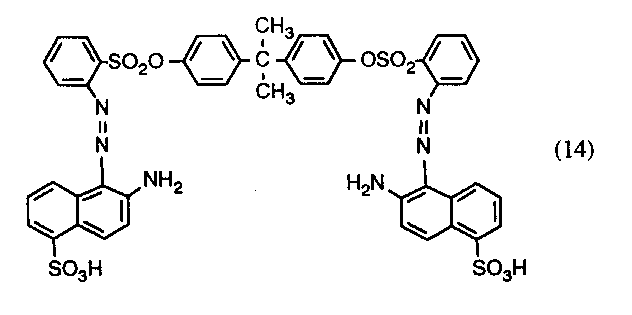 oder einen braunen Farbstoff der Formel 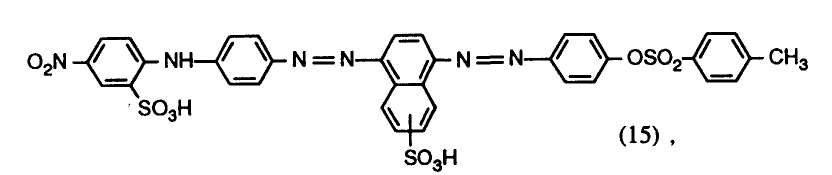 wobei die Sulfogruppe am Naphthalinkern in 6- oder 7-Stellung angeordnet ist, oder den braunen Farbstoff der Formel 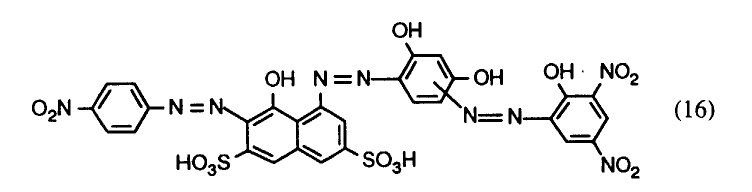 oder den braunen Farbstoff der Formel 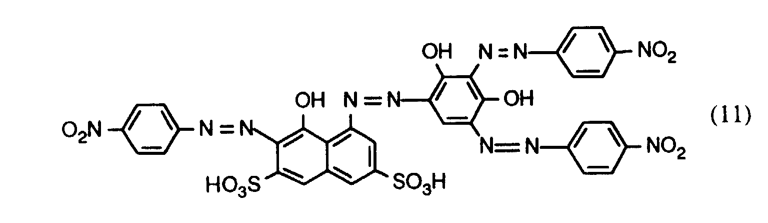 oder den braunen Farbstoff der Formel 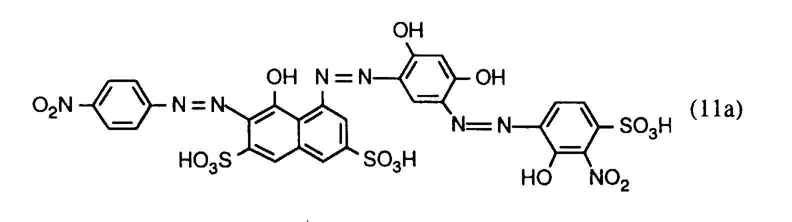 oder den schwarzen Farbstoff der Formel 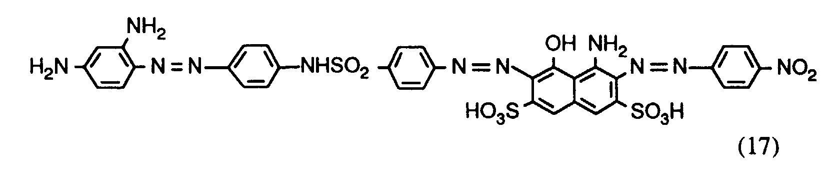 oder 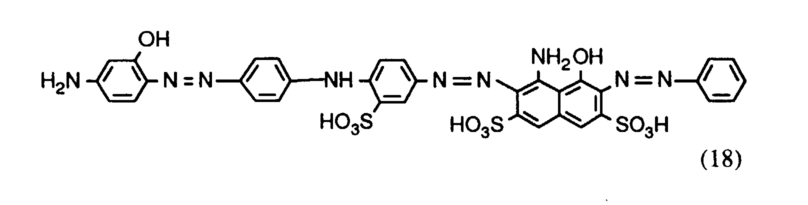 oder

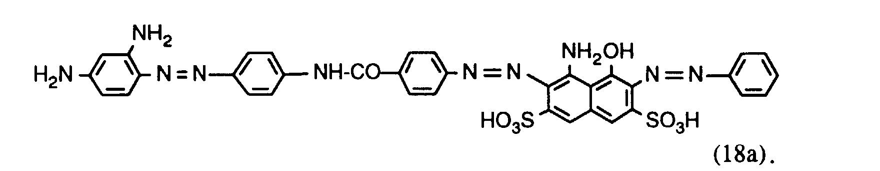

Die erfindungsgemässen Farbstoffe sind anionischer Natur und werden vorteilhaft in Form ihrer Salze, insbesondere Alkalisalze oder Ammoniumsalze, eingesetzt. Als Alkalisalze kommen vor allem die Lithium-, Kalium- oder Natriumsalze in Betracht und unter Ammoniumsalzen sind auch Salze organischer Amine zu verstehen, z.B. solcher, die mit C₁-C₆-Alkyl- oder Hydroxy-C₁-C₆-alkylgruppen substituiert sind.

Die im erfindungsgemässen Verfahren verwendeten Farbstoffe sind bekannt oder können auf an sich bekannte Art und Weise hergestellt werden.

Die Mengen, in denen die erfindungsgemäss verwendeten Farbstoffe in den Färbebädern eingesetzt werden, können je nach der gewünschten Farbtiefe in weiten Grenzen schwanken. Im allgemeinen sind Farbstoffmengen von 0,1 bis 10, vorzugsweise 0,5 bis 4 Gew.%, bezogen auf das Gewicht des zu färbenden Leders, vorteilhaft.

Neben Wasser und den Farbstoffen kann die Färbeflotte noch weitere Zusätze enthalten, z.B. Säuren, Basen oder Salze zur Einstellung des gewünschten pH-Wertes, sowie Hilfsmittel, wie z.B. Netzmittel, Fettungsmittel, farbvertiefende Hilfsmittel, Egalisiermittel, die Penetration beschleunigende Mittel und/oder Antischaummittel.

Das erfindungsgemässe Verfahren weist den grossen Vorteil auf, dass es nicht nur für einen bestimmten Ledertyp geeignet, sondern auf die verschiedenen Ledertypen anwendbar ist, beispielsweise auf Chromleder, nachgegerbtes Leder oder Velourleder von Ziege, Rind oder Schwein.

Das Färben erfolgt vorzugsweise nach dem Ausziehverfahren, z.B. bei einem Flottenverhältnis von 1:1,5 bis 1:20, vorzugsweise 1:2 bis 1:10, und bei Temperaturen von 20 bis 100° C, vorzugsweise 30 bis 60° C. Falls erwünscht oder erforderlich, kann das Leder einer Vorbehandlung unterworfen werden, beispielsweise einer Neutralisation oder Walke.

Die Färbedauer schwankt je nach Art des Leders und der gewünschten Farbtiefe, liegt im allgemeinen jedoch zwischen 30 und 180 Minuten. Im Anschluss an die Färbung wird das Leder gespült und wie üblich fertiggestellt.

Man erhält nach dem erfindungsgemässen Verfahren Lederfärbungen in brillanten Farbtönen und mit guten Echtheiten, wie z.B. Licht- und Nassechtheiten.

Für den Einsatz zum Färben werden die einzelnen Farbstoffe miteinander vermischt. Die Farbstoffe können dabei einzeln als Stammlösungen für das Färbeverfahren vorbereitet oder zusammen in eine einzige Stammlösung formuliert werden.

Ein weiterer Gegenstand der Erfindung sind Farbstofftrichromie-Mischungen, enthaltend mindestens einen gelben Farbstoff der Formel (1), mindestens einen roten Farbstoff der Formel (2) und mindestens einen blauen Farbstoff der Formel (3) oder (3a).

Bevorzugte Farbstofftrichromie-Mischungen enthalten 1 bis 98 Gew.% eines gelben Farbstoffes der Formel (1), 1 bis 98 Gew.% eines roten Farbstoffes der Formel (2) und 1 bis 98 Gew.% eines blauen Farbstoffes der Formel (3) oder (3a), insbesondere 10 bis 70 Gew.% eines gelben Farbstoffes der Formel (1), 10 bis 50 Gew.% eines roten Farbstoffes der Formel (2) und 10 bis 50 Gew.% eines blauen Farbstoffes der Formel (3) oder (3a).

Die nachfolgenden Beispiele veranschaulichen die Erfindung, ohne sie darauf zu beschränken. Teile bedeuten Gewichtsteile und Prozente Gewichtsprozente. Die Farbstoffe werden in handelsüblicher Pulver- oder Flüssigform eingesetzt.

Beispiel 1: 100 Teile chromgegerbtes Rindleder (Falzgewicht) werden 15 Minuten lang in 300 Teilen Wasser bei 30°C gewaschen und anschliessend 60 Minuten in einer aus 300 Teilen Wasser, 2 Teilen Neutralisationsmittel (Na- Salze aromatischer Sulfosäuren und aliphatischer Dicarbonsäuren) und 0,5 Teilen Natriumbicarbonat bestehenden Flotte bei 30°C neutralisiert. Anschliessend folgt eine 15 Minuten dauernde Waschoperation in 300 Teilen Wasser bei Raumtemperatur.

Das derart behandelte Leder wird nun in einer frisch angesetzten Flotte aus 300 Teilen Wasser und 1,41 Teilen der Farbstoffmischung, bestehend aus 1,06 Teilen des gelben Farbstoffes der Formel 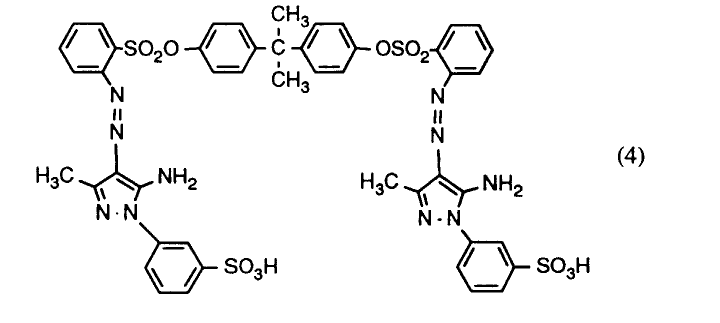 und 0,35 Teilen des blauen Farbstoffes der Formel 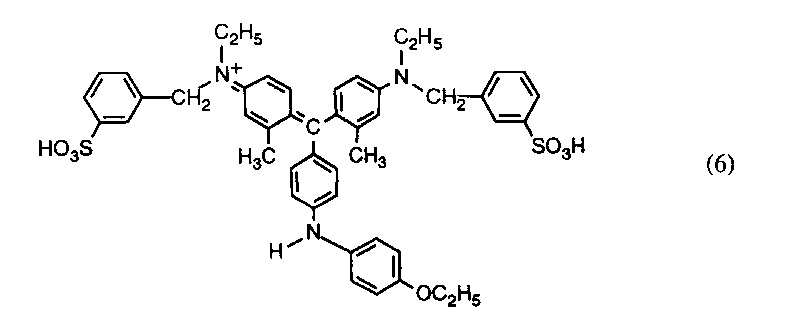 30 Minuten bei 50°C gefärbt. Dann werden der Färbeflotte 3 Teile eines synthetischen Fettungsmittels (Zubereitung auf Basis von sulfonierten aliphatischen Kohlenwasserstoffen, Fettsäuren und deren Derivate) und nach weiteren 30 Minuten 0,5 Teile 85 %ige Ameisensäure zugesetzt. Man färbt noch 30 Minuten bei unveränderter Temperatur weiter und stellt das gefärbte Leder nach dem Spülen wie üblich fertig.

Man erhält ein egales grüngefärbtes Leder mit ausgezeichneten Echtheiten und reiner Nuance. Die Kombinierbarkeit von diesen Farbstoffen ist besonders gut. Wenn die Lederoberfläche leicht angeschliffen wird, sieht man, dass beide Farbstoffe Leder gleich tief färben.

Beispiel 2: 100 Teile Chromrindleder (Falzgewicht) werden nach den Angaben im Beispiel 1 neutralisiert und dann bei 30°C in gleicher Flotte mit 7 Teilen eines flüssigen synthetischen Nachgerbstoffes (Kondensationsprodukte von polyphenolischen Sulfosäuren mit Formaldehyd und Harnstoff) weitere 60 Minuten behandelt. Danach folgt ein Waschprozess von 15 Minuten Dauer in 300 Teilen Wasser bei Raumtemperatur. Dieses nachgegerbte Chromrindleder wird anschliessend bei 50° C in einer Flotte, bestehend aus 300 Teilen Wasser sowie 2,82 Teilen der im Beispiel 1 eingesetzten Farbstoffmischung, gefärbt Nach einer Färbedauer von 30 Minuten erfolgt ein Zusatz von 3 Teilen des synthetischen Fettungsmittels aus Beispiel 1 und nach weiteren 30 Minuten eine Zugabe von 1 Teil 85 %iger Ameisensäure. Nach dem Ansäuern wird die Behandlung noch 30 Minuten bei 50°C fortgesetzt. Anschliessend wird in kaltem Wasser gespült und fertiggestellt. Die erhaltene grüne Färbung zeichnet sich durch gute Echtheitseigenschaften und eine reine Nuance aus. Die Kombinierbarkeit der Farbstoffe ist auch auf diesem Leder sehr gut, was wie im Beispiel 1 geprüft wird. Ausserdem stimmt die Färbung im Farbton weitgehend überein mit der nach Beispiel 1 auf nicht nachgegerbtem Chromrindleder mit der gleichen Farbstoffmischung erhalten Ausfärbung.

Beispiel 3: Arbeitet man wie im Beispiel 2 beschrieben, verwendet jedoch anstelle des dort eingesetzten Nachgerbstoffs 3 Teile eines stark anionischen Nachgerbstoffs (Formaldehyd-Kondensationsprodukt von phenolischen Sulfosäuren), so erhält man Leder mit einer sehr anionischen Oberfläche.
Die erhaltene Färbung stimmt vom Farbton her weitgehend überein mit derjenigen auf nicht nachgegertem Chromrindleder nach Beispiel 1 und derjenigen auf nachgegerbtem Chromrindleder nach Beispiel 2.

Beispiel 4: Arbeitet man wie im Beispiel 1 beschrieben, verwendet jedoch anstelle der dort eingesetzten Farbstoffmischung 0,734 Teile einer Farbstoffmischung, bestehend aus 0,477 Teilen des gelben Farbstoffs der Formel (4), 0,077 Teilen des blauen Farbstoffs der Formel (6) und 0,180 Teilen des roten Farbstoffs der Formel 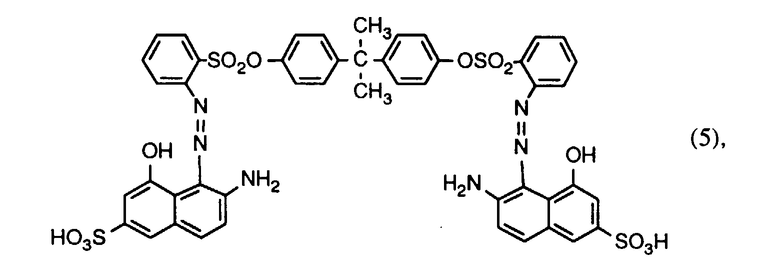 so erhält man mittelbraun gefärbtes Leder.

Die Kombinierbarkeit der Farbstoffe ist sehr gut. Wenn die Lederoberfläche leicht angeschliffen wird, sieht man, dass alle Farbstoffe das Leder gleich tief färben.

Beispiel 5: Arbeitet man wie im Beispiel 2 beschrieben, verwendet jedoch anstelle der dort eingesetzten Farbstoffmischung 1,468 Teile der im Beispiel 4 eingesetzten Farbstoffmischung, so erhält man eine Färbung, die im Farbton ebenfalls mit der auf nicht nachgegerbtem Chromrindleder nach Beispiel 4 erhaltenen Ausfärbung übereinstimmt.

Beispiel 6: 100 Teile Chromrindleder (Falzgewicht) werden nach den Angaben im Beispiel 2 neutralisiert und nachgegerbt und danach in einer Flotte, enthaltend 300 Teile Wasser, 1,42 Teile des Farbstoffes der Formel (4) und 0.26 Teile des Farbstoffes der Formel (6) während 30 Minuten bei 50°C gefärbt. Nach 30 Minuten erfolgt ein Zusatz von 3 Teilen des synthetischen Fettungsmittels aus Beispiel 1 und nach weiteren 30 Minuten eine Zugabe von 1 Teil 85 %iger Ameisensäure. Nach dem Ansäuern wird die Behandlung noch 30 Minuten bei 50°C fortgesetzt.

Anschliessend wird in einem frischen Bad noch mit 1 Teil eines farbvertiefenden Hilfsmittel (Polyquaternäres Amin-Äthylenoxid-Addukt) in 300 Teilen Wasser das Leder nachbehandelt. Nach einer Behandlungsdauer von 15 Minuten wird dem Färbebad eine halbe Menge der obengenannten Farbstoffe zugesetzt und danach 15 Minuten bei 50°C weitergefärbt. Dann erfolgt ein Zusatz von 0,25 Teilen 85 %iger Ameisensäure. Nach weiteren 20 Minuten ist die Färbung beendet. Es wird dann in kaltem Wasser gespült.

Die wie üblich fertiggestellte Färbung zeichnet sich durch hervorragende Echtheiten und einen vollen, reinen grünen Farbton aus. Sie ist wesentlich voller und stärker als eine entsprechende Färbung ohne das farbvertiefende Hilfsmittel. Gleiche Ergebnisse erhält man auch mit den anderen Farbstoffmischungen aus den Farbstoffen der Formeln (4), (5) und (6).

Beispiel 7: 100 Teile chromgares Bekleidungsveloursleder (Trockengewicht) werden bei 50°C in einer Lösung von 1000 Teilen Wasser und 2 Teilen 24 %igem Ammoniak während 60 Minuten aufgewalkt. Danach folgt ein Waschprozess von 15 Minuten Dauer in 1000 Teilen Wasser von 50°C.

Nach diesen vorbereitenden Operationen wird das Leder in einer Flotte aus 1000 Teilen Wasser, 2 Teilen Ammoniak 24%ig und 11,28 Teilen der im Beispiel 1 eingesetzten Farbstoffmischung bei 50°C gefärbt.

Nach einer Färbedauer von 60 Minuten wird mit 4 Teilen 85 %iger Ameisensäure angesäuert und hierauf noch 20 Minuten weitergefärbt.

Die Fertigstellung des gefärbten Leders erfolgt nach einer Behandlung in frischem Bad mit 1000 Teilen Wasser, 2,5 Teilen eines Dicyandiaminoformaldehydkondensationsproduktes und 0,5 Teilen 85 %iger Ameisensäure während 45 Minuten bei 50°C. Das erhaltene gefärbte Leder besitzt einen reinen grünen Farbton. Es zeichnet sich durch gute Echtheiten und gutes Deckvermögen aus.

Beispiel 8: 100 Teile Chromspaltvelours-Leder (Trockengewicht) werden in 1000 Teilen Wasser und 2 Teilen 24 %igem Ammoniak 60 Minuten lang bei 50°C aufgewalkt und anschliessend mit 1000 Teilen Wasser von 50°C während 15 Minuten gewaschen.

Das derart vorbereitete Leder wird nun in einer frischen Flotte, bestehend aus 1000 Teilen Wasser, 2 Teilen 24%igem Ammoniak und 5,64 Teilen der im Beispiel 1 eingesetzten Farbstoffmischung, bei 50°C gefärbt. Nach 60 Minuten fügt man noch 4 Teile 85 %ige Ameisensäure hinzu und färbt weitere 20 Minuten bei diese Temperatur.

Das gefärbte Leder wird in kaltem Wasser gespült und fertiggestellt. Man erhält eine reine grüne Färbung, die sich durch gute Echtheiten und Nuancengleichheit zwischen Velours- und Fleischseite auszeichnet.

Beispiel 9: Arbeitet man wie im Beispiel 1 beschrieben, verwendet jedoch anstelle der dort eingesetzten Farbstoffmischung 0,70 Teile einer Farbstoffmischung, bestehend aus 0,37 Teilen des gelben Farbstoffes der Formel (4), 0,08 Teile des blauen Farbstoffes der Formel (6) und 0,25 Teile des braunen Farbstoffes der Formel 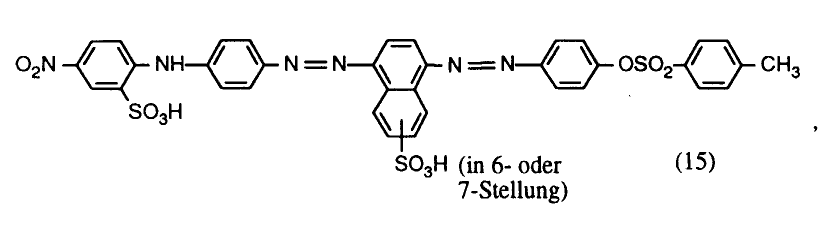 so erhält man ein farbstark mittelbraun gefärbtes Leder.

Beispiel 10: Arbeitet man wie im Beispiel 2 beschrieben, verwendet jedoch anstelle der dort eingesetzten Farbstoffmischung 1,40 Teile der im Beispiel 9 eingesetzten Farbstoffmischung, so erhält man eine Färbung, die im Farbton ebenfalls mit der auf nicht nachgegerbtem Chromrindleder nach Beispiel 9 erhaltenen Ausfärbung übereinstimmt.

Beispiel 11: Arbeitet man wie im Beispiel 9 beschrieben, verwendet jedoch die Farbstoffmischung zusammen mit 1 Teil eines anionischen Färbehilfsmittels (Natriumsalz der Dinaphthylmethandisulfosäure), so erhält man ein mehr durchgefärbtes Leder.

Beispiele 12 bis 37: Nach den in den Beispielen 1, 2, 4 und 11 beschriebenen Verfahren erhält man mit dem dort aufgeführten gelben Farbstoff der Formel (4), dem roten Farbstoff der Formel (5) und dem blauen Farbstoff der Formel (6) bei Anwendung in den angegebenen Mengen (Teile) Lederfärbungen in den angegebenen Nuancen.

| Beispiel | Farbstoff (4) | Farbstoff (5) | Farbstoff (6) | Nuance |
|---|---|---|---|---|
| 12 | 0,96 | 0,33 | 0,11 | rotstichig braun |
| 13 | 0,96 | 0,11 | 0,34 | grünstichig braun |
| 14 | 0,8 | 0,28 | 0,28 | rotstichig braun |
| 15 | 0,69 | 0,47 | 0,16 | bordeaux |
| 16 | 0,69 | 0,15 | 0,48 | grünstichig grau |
| 17 | 0,48 | 0,66 | 0,11 | bordeaux |
| 18 | 0,51 | 0,37 | 0,38 | braun |
| 19 | 0,48 | 0,11 | 0,67 | dunkelgrün |
| 20 | 0,4 | 0,55 | 0,28 | bordeaux |
| 21 | 0,4 | 0,28 | 0,56 | dumpfes violett |
| 22 | 0,24 | 0,77 | 0,17 | bordeaux |
| 23 | 0,16 | 0,66 | 0,34 | blaustichig bordeaux |
| 24 | 0,22 | 0,47 | 0,48 | rotstichig violett |
| 25 | 0,16 | 0,33 | 0,67 | blaustichig violett |
| 26 | 0,24 | 0,17 | 0,78 | stumpfes blau (petrol) |
| 27 | 1,44 | 0,11 | --- | orange |
| 28 | 1,28 | 0,22 | --- | rotstichig orange |
| 29 | 0,96 | 0,44 | --- | scharlachrot |
| 30 | 0,64 | 0,66 | --- | neutrales rot |
| 31 | --- | 0,11 | 1,01 | blau |
| 32 | --- | 0,22 | 0,9 | marineblau |
| 33 | --- | 0,44 | 0,67 | violett |
| 34 | --- | 0,66 | 0,45 | rotstichig violett |
| 35 | --- | 0,88 | 0,22 | blaustichig bordeaux |
| 36 | --- | 0,99 | 0,11 | blaustichig rot |
| 37 | 1,12 | 0,17 | 0,17 | gelbstichig braun |

Beispiele 38 und 39: Nach den in den Beispielen 1 bis 4 und 9 beschriebenen Verfahren erhält man mit dem dort aufgeführten gelben Farbstoff der Formel (4), dem roten Farbstoff der Formel (5) und dem braunen Farbstoff der Formel (15) bei Anwendung in den angegebenen Mengen (Teile) Lederfärbungen in den angegebenen Nuancen.

| Beispiel | Farbstoff (4) | Farbstoff (5) | Farbstoff (15) | Nuance |
|---|---|---|---|---|
| 38 | 0,24 | 0,17 | 0,70 | braun |
| 39 | 0,16 | 0,66 | 0,3 | orangebraun |

Beispiel 40: Nach den in den Beispielen 1 bis 4 und 9 beschriebenen Verfahren erhält man mit 0,1 Teilen des dort aufgeführten roten Farbstoffes der Formel (5), 0,3 Teilen des blauen Farbstoffes der Formel (6) und 0,6 Teilen des braunen Farbstoffes der Formel (15) eine Lederfärbung in brauner Nuance.

Beispiele 41 bis 43: Nach den in den Beispielen 1 bis 4 beschriebenen Verfahren erhält man mit dem dort aufgeführten gelben Farbstoff der Formel (4), dem roten Farbstoff der Formel (5) und dem blauen Farbstoff der Formel 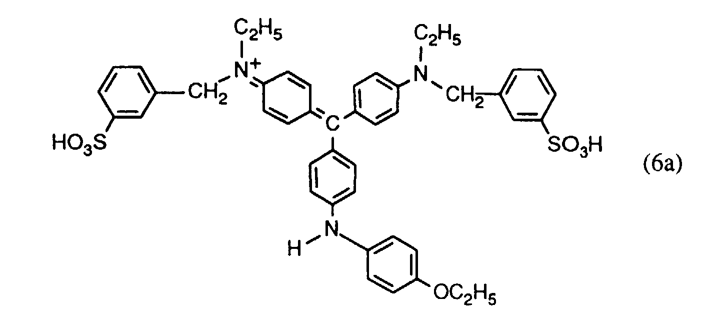 bei Anwendung in den angegebenen Mengen (Teile) Lederfärbungen in den angegebenen Nuancen.

| Beispiel | Farbstoff (4) | Farbstoff (5) | Farbstoff (6a) | Nuance |
|---|---|---|---|---|
| 41 | 1,12 | 0,17 | 0,15 | gelbstichig braun |
| 42 | 0,24 | 0,77 | 0,15 | bordeaux |
| 43 | 0,22 | 0,47 | 0,43 | rotstichig violett |

Beispiele 44 bis 47: Nach den in den Beispielen 1 bis 4 und 41 beschriebenen Verfahren erhält man mit dem dort aufgeführten roten Farbstoff der Formel (5), dem blauen Farbstoff der Formel (6a) und dem orangenen Farbstoff der Formel 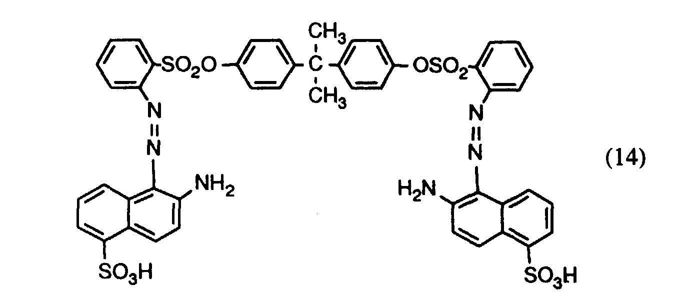 bei Anwendung in den angegebenen Mengen (Teile) Lederfärbungen in den angegebenen Nuancen.

| Beispiel | Farbstoff (14) | Farbstoff (5) | Farbstoff (6a) | Nuance |
|---|---|---|---|---|
| 44 | 1,4 | 0,17 | 0,15 | braun |
| 45 | 1,0 | --- | 0,5 | grau |
| 46 | 1,0 | 0,55 | --- | scharlach |
| 47 | --- | 0,55 | 0,5 | violett |

Beispiel 48: Nach den in den Beispielen 1 bis 4 und 41 beschriebenen Verfahren erhält man mit 0,4 Teilen des dort aufgeführten roten Farbstoffes der Formel (5), 0,5 Teilen des blauen Farbstoffes der Formel (6a) und 0,1 Teilen des schwarzen Farbstoffes der Formel

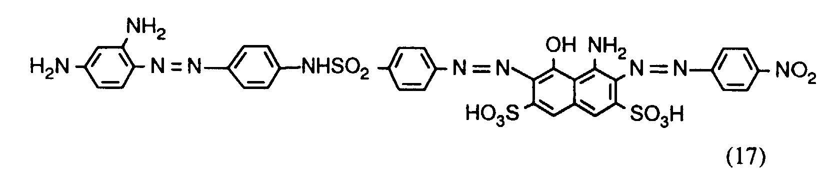

Lederfärbungen mit gedeckt violetter Nuance.

Beispiel 49: Arbeitet man wie im Beispiel 1 beschrieben, verwendet jedoch anstelle der dort eingesetzten Farbstoffmischung 0,85 Teile einer Farbstoffmischung, bestehend aus 0,50 Teilen des gelben Farbstoffs der Formel (4) und 0,35 Teilen des blauen Farbstoffs der Formel (7) 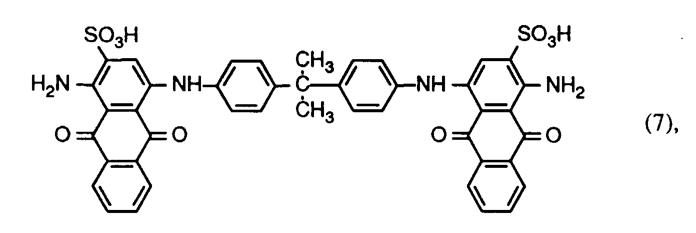 so erhält man grün gefärbtes Leder.

Die Kombinierbarkeit der Farbstoffe ist sehr gut. Wenn die Lederoberfläche leicht angeschliffen wird, sieht man, dass alle Farbstoffe das Leder gleich tief färben.

Beispiel 50: Arbeitet man wie im Beispiel 2 beschrieben, verwendet jedoch anstelle der dort eingesetzten Farbstoffmischung 1,70 Teile der im Beispiel 49 eingesetzten Farbstoffmischung, so erhält man eine Färbung, die im Farbton mit der auf nicht nachgegerbtem Chromrindleder nach Beispiel 49 erhaltenen Ausfärbung übereinstimmt.

Beispiel 51: Arbeitet man wie in den Beispiel 4 und 49 beschrieben, verwendet jedoch anstelle der dort eingesetzten Farbstoffmischungen 0,91 Teile einer Farbstoffmischung, bestehend aus 0,48 Teilen des gelben Farbstoffs der Formel (4), 0,25 Teilen des blauen Farbstoffs der Formel (7) und 0,18 Teilen des roten Farbstoffes der Formel (5) so erhält man mittelbraun gefärbtes Leder.

Die Kombinierbarkeit der Farbstoffe ist sehr gut. Wenn die Lederoberfläche leicht angeschliffen wird, sieht man, dass alle Farbstoffe das Leder gleich tief färben.

Beispiel 52: Arbeitet man wie im Beispiel 51 beschrieben, verwendet jedoch anstelle der dort eingesetzten Farbstoffmischung 0,93 Teile einer Farbstoffmischung, bestehend aus 0,48 Teilen des gelben Farbstoffs der Formel (4), 0,27 Teilen des blauen Farbstoffs der Formel 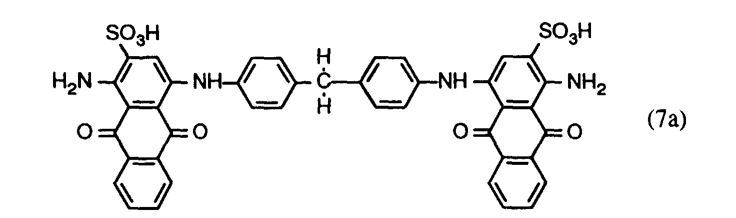 und 0,18 Teilen des roten Farbstoffes der Formel (5) so erhält man mittelbraun gefärbtes Leder.

Die Kombinierbarkeit der Farbstoffe ist sehr gut. Wenn die Lederoberfläche leicht angeschliffen wird, sieht man, dass alle Farbstoffe das Leder gleich tief färben.

Beispiel 53: Nach den in den Beispielen 1 bis 3 und 49 beschriebenen Verfahren erhält man mit 0,4 Teilen des dort aufgeführten roten Farbstoffes der Formel (5), 0,5 Teilen des blauen Farbstoffes der Formel (7) und 0,1 Teilen des schwarzen Farbstoffes der Formel 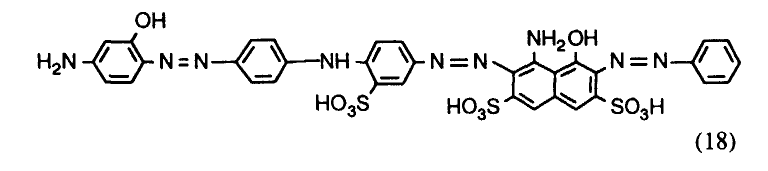 Lederfärbungen mit gedeckt violetter Nuance.

Beispiel 54: Nach den in den Beispielen 1 bis 3 und 53 beschriebenen Verfahren erhält man mit 0,4 Teilen des dort aufgeführten roten Farbstoffes der Formel (5), 0,5 Teilen des blauen Farbstoffes der Formel (7a) und 0,1 Teilen des schwarzen Farbstoffes der Formel

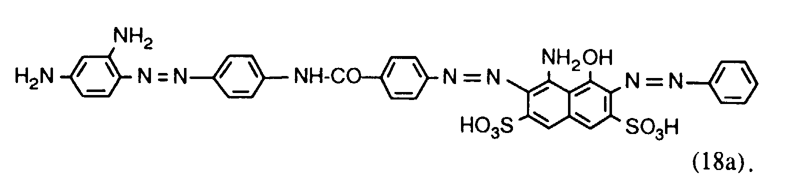

Lederfärbungen mit gedeckt violetter Nuance.

## Patentansprüche

1. Verfahren zum Färben von Leder mit Farbstoffmischungen , dadurch gekennzeichnet, dass man mindestens zwei metallfreie Farbstoffe mit jeweils zwei Sulfo- oder Carboxygruppen und einem Molekulargewicht zwischen 790 und 1100 einsetzt, ausgewählt aus der Gruppe, bestehend aus
a) einem gelben Farbstoff der Formel 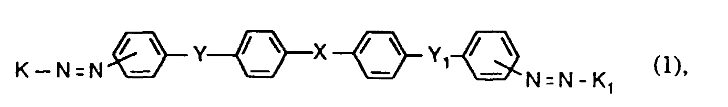 worin
Y und Y₁ unabhängig voneinander je -SO₂O-, -COO-, -CONH- oder -SO₂NH-, X -C₁-C₄-Alkylen-, -CH=CH-, -O-, -S-, -SO₂-, -NH-, 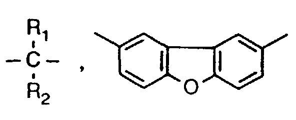 oder 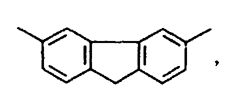 wobei R₁ und R₂ unabhängig voneinander je C₁-C₄-Alkyl bedeuten, und
K und K₁ unabhängig voneinander je eine Kupplungskomponente der Formel 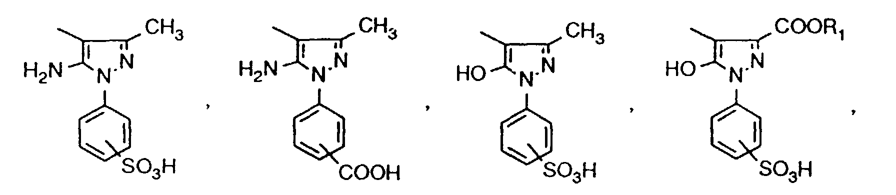 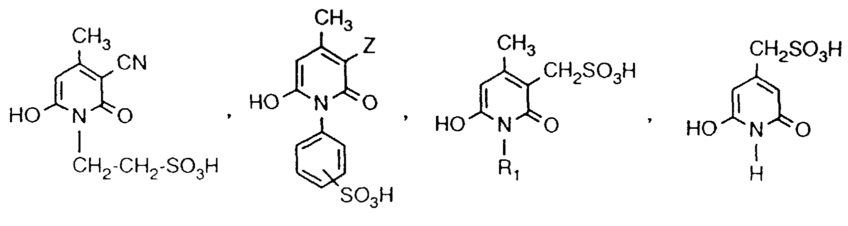 oder 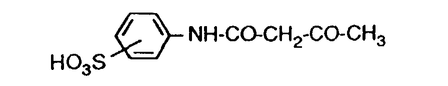 bedeuten, worin Z CN, COOH, COONH₂ oder COOR₁ bedeutet,
b) einem roten Farbstoff der Formel 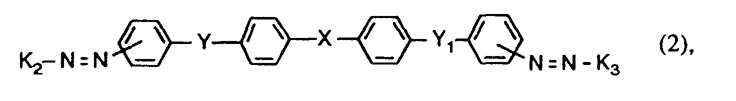 worin K₂ und K₃ unabhängig voneinander je eine Kupplungskomponente der Formel 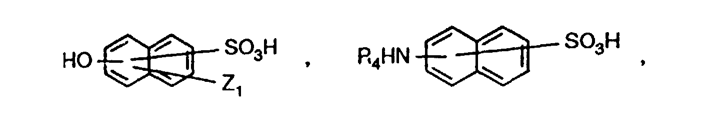 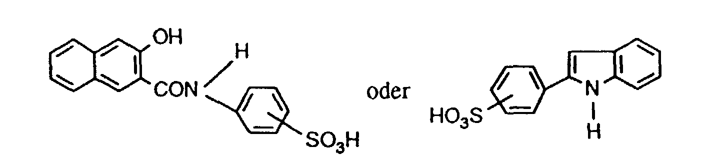 bedeuten, worin Z₁ Wasserstoff, OH oder NHR₃ ist, wobei R₃ Wasserstoff, C₁-C₄-Alkyl, Cyan-C₂-C₄-Alkyl, C₁-C₄-Alkylcarbonyl, Aminocarbonyl, Phenylcarbonyl oder Phenyl bedeutet, wobei die Phenylgruppe in den beiden letzgenannten Resten durch C₁-C₄-Alkyl substituiert sein kann, und
R₄ Wasserstoff oder Phenyl bedeutet,
und
c) einem blauen Farbstoff der Formel 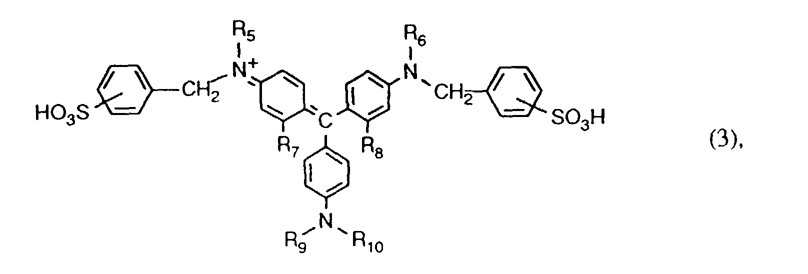 worin
R₅, R₆, R₇, R₈ und R₉ unabhängig voneinander je Wasserstoff oder C₁-C₄-Alkyl sind und
R₁₀ Wasserstoff, Phenyl oder durch C₁-C₄-Alkyl oder C₁-C₄-Alkoxy substituiertes Phenyl bedeutet, oder der Formel 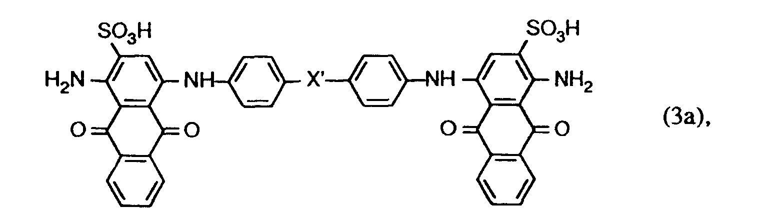 worin X' -C₁-C₄-Alkylen-, -CH=CH-, -O-, -S-, -SO₂-, -NH-, 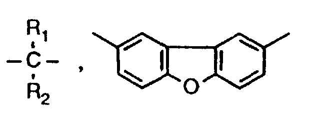 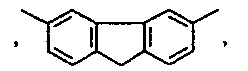 -NH-CO-, -NH-SO₂- oder -NH-CO-NH- ist, wobei R₁ und R₂ unabhängig voneinander je C₁-C₄-Alkyl bedeuten.

2. Verfahren gemäss Anspruch 1, dadurch gekennzeichnet, dass man zum Trichromiefärben eine Farbstoffmischung, enthaltend einen gelben Farbstoff der Formel (1), einen roten Farbstoff der Formel (2) und einen blauen Farbstoff der Formel (3) oder (3a), verwendet.

3. Verfahren gemäss einem der Ansprüche 1 bis 2, dadurch gekennzeichnet, dass man einen gelben Farbstoff der Formel (1) verwendet, worin Y das gleiche bedeutet wie Y₁.

4. Verfahren gemäss einem der Ansprüche 1 bis 3, dadurch gekennzeichnet, dass man einen gelben Farbstoff der Formel (1) verwendet, worin Y und Y₁ je -SO₂O- bedeuten.

5. Verfahren gemäss einem der Ansprüche 1 bis 4, dadurch gekennzeichnet, dass man einen gelben Farbstoff der Formel (1) verwendet, worin 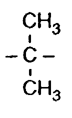 bedeutet.

6. Verfahren gemäss einem der Ansprüche 1 bis 5, dadurch gekennzeichnet, dass man einen gelben Farbstoff der Formel (1) verwendet, worin K das gleiche bedeutet wie K₁.

7. Verfahren gemäss einem der Ansprüche 1 bis 6, dadurch gekennzeichnet, dass man einen gelben Farbstoff der Formel (1) verwendet, worin K und K₁ je eine Kupplungskomponente der Formel 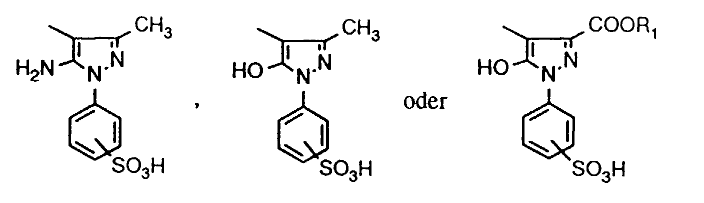 bedeuten.

8. Verfahren gemäss einem der Ansprüche 1 bis 7, dadurch gekennzeichnet, dass man einen gelben Farbstoff der Formel (1) verwendet, worin K und K₁ je eine Kupplungskomponente der Formel 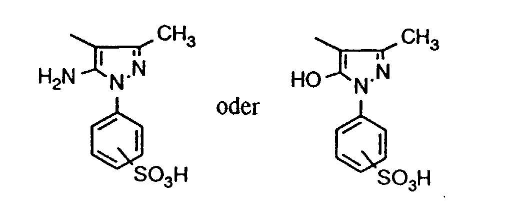 bedeutet

9. Verfahren gemäss einem der Ansprüche 1 bis 8, dadurch gekennzeichnet, dass man den gelben Farbstoff der Formel 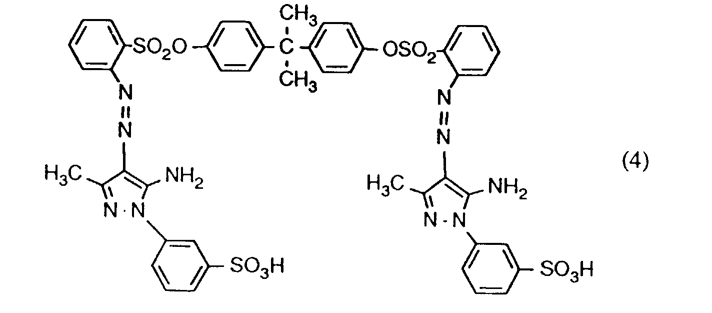 verwendet.

10. Verfahren gemäss einem der Ansprüche 1 bis 9, dadurch gekennzeichnet, dass man einen roten Farbstoff der Formel (2) verwendet, worin Y das gleiche bedeutet wie Y₁.

11. Verfahren gemäss Anspruch 10, dadurch gekennzeichnet, dass man einen roten Farbstoff der Formel (2) verwendet, worin Y und Y₁ je -SO₂O- bedeuten.

12. Verfahren gemäss einem der Ansprüche 1 bis 11, dadurch gekennzeichnet, dass man einen roten Farbstoff der Formel (2) verwendet, worin 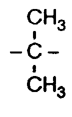 bedeutet.

13. Verfahren gemäss einem der Ansprüche 1 bis 12, dadurch gekennzeichnet, dass man einen roten Farbstoff der Formel (2) verwendet, worin K₂ das gleiche bedeutet wie K₃.

14. Verfahren gemäss einem der Ansprüche 1 bis 13, dadurch gekennzeichnet, dass man einen roten Farbstoff der Formel (2) verwendet, worin K₂ und K₃ je eine Kupplungskomponente der Formel 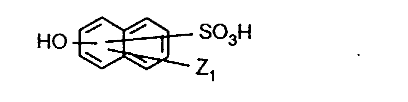 bedeuten, worin Z₁ Wasserstoff, OH oder NHR₃ ist, wobei R₃ Wasserstoff, C₁-C₄-Alkyl, Cyan-C₂-C₄-Alkyl, C₁-C₄-Alkylcarbonyl, Aminocarbonyl, Phenylcarbonyl oder Phenyl bedeutet, wobei die Phenylgruppe in den beiden letzgenannten Resten durch C₁-C₄-Alkyl substituiert sein kann.

15. Verfahren gemäss Anspruch 14, dadurch gekennzeichnet, dass man einen roten Farbstoff der Formel (2) verwendet, worin K₂ und K₃ je eine Kupplungskomponente der Formel 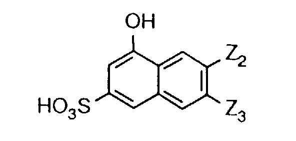 bedeuten, wobei von den Substituenten Z₂ und Z₃ der eine Wasserstoff und der andere NHR₃ bedeutet, wobei R₃ Wasserstoff, C₁-C₄-Alkyl, Cyan-C₂-C₄-Alkyl, C₁-C₄-Alkylcarbonyl, Aminocarbonyl, Phenylcarbonyl oder Phenyl bedeutet, wobei die Phenylgruppe in den beiden letzgenannten Resten durch C₁-C₄-Alkyl substituiert sein kann.

16. Verfahren gemäss Anspruch 15, dadurch gekennzeichnet, dass man einen roten Farbstoff der Formel (2) verwendet, worin K₂ und K₃ je eine Kupplungskomponente der Formel 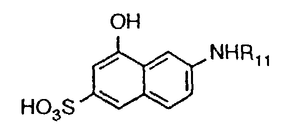 bedeuten, worin R₁₁ Wasserstoff, C₁-C₄-Alkyl, Cyan-C₂-C₄-Alkyl, C₁-C₄-Alkylcarbonyl, Phenylcarbonyl, Phenyl oder durch C₁-C₄-Alkyl substituiertes Phenyl bedeutet.

17. Verfahren gemäss Anspruch 15, dadurch gekennzeichnet, dass man einen roten Farbstoff der Formel (2) verwendet, worin K₂ und K₃ je eine Kupplungskomponente der Formel 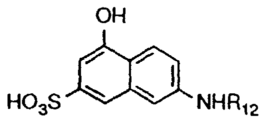 bedeuten, worin R₁₂ Wasserstoff, C₁-C₄-Alkyl, Aminocarbonyl, C₁-C₄-Alkylcarbonyl oder Phenylcarbonyl bedeutet.

18. Verfahren gemäss einem der Ansprüche 1 bis 16, dadurch gekennzeichnet, dass man den roten Farbstoff der Formel 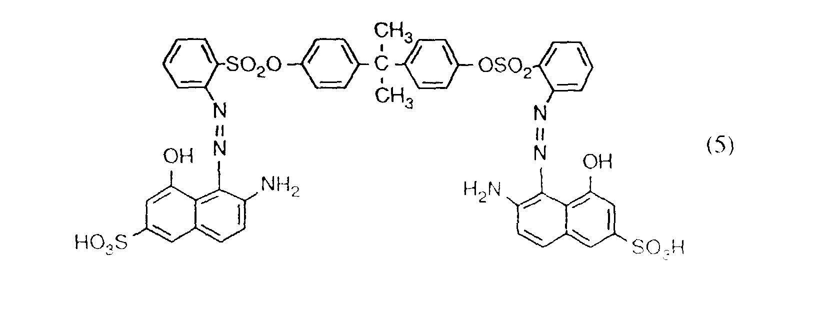 verwendet.

19. Verfahren gemäss einem der Ansprüche 1 bis 18, dadurch gekennzeichnet, dass man einen blauen Farbstoff der Formel (3) verwendet, worin R₅, R₆, R₇, R₈ und R₉ unabhängig voneinander je Wasserstoff oder C₁-C₂-Alkyl und R₁₀ Wasserstoff, Phenyl oder durch C₁-C₂-Alkyl oder C₁-C₂-Alkoxy substituiertes Phenyl bedeutet, oder der Formel (3a). worin X' -C₁-C₄-Alkylen-, -CH=CH-, 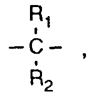 -NH-CO- oder -NH-CO-NH- ist, wobei R₁ und R₂ unabhängig voneinander je C₁-C₄-Alkyl bedeuten.

20. Verfahren gemäss Anspruch 19, dadurch gekennzeichnet, dass man einen blauen Farbstoff der Formel (3) verwendet, worin R₅ und R₆ unabhängig voneinander je C₁-C₂-Alkyl, R₇ und R₈ unabhängig voneinander je Wasserstoff oder C₁-C₂-Alkyl, R₉ Wasserstoff und R₁₀ Phenyl oder durch C₁-C₂-Alkyl oder C₁-C₂-Alkoxy substituiertes Phenyl bedeutet, oder einen blauen Farbstoff der Formel (3a), worin X' -C₁-C₄-Alkylen- oder 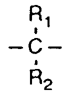 ist, wobei R₁ und R₂ unabhängig voneinander je C₁-C₄-Alkyl bedeuten.

21. Verfahren gemäss einem der Ansprüche 1 bis 20, dadurch gekennzeichnet, dass man den blauen Farbstoff der Formel 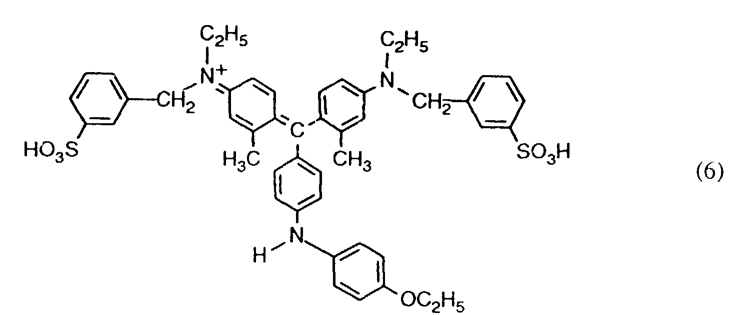 oder der Formel 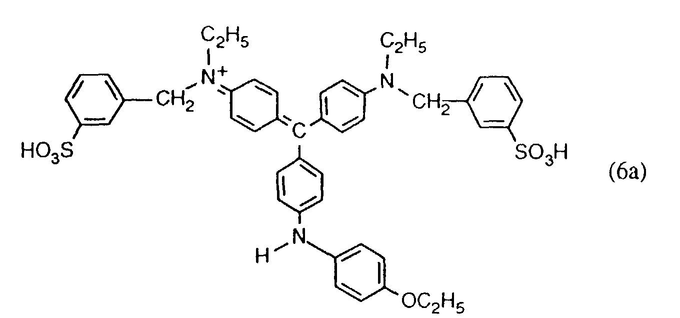 oder der Formel 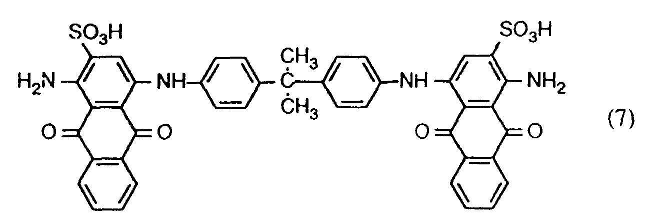 oder der Formel 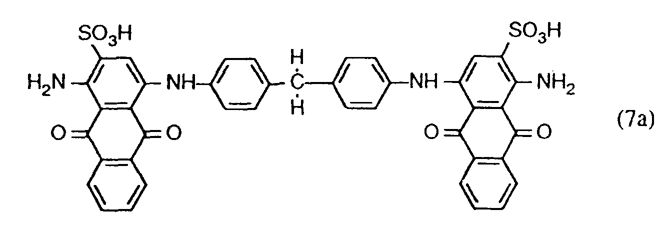 verwendet.

22. Verfahren gemäss einem der Ansprüche 1 bis 21, dadurch gekennzeichnet, dass man mindestens zwei Farbstoffe verwendet, deren Parachor zwischen 1750 und 2200 liegt und deren log P zwischen -1 und 1 liegt.

23. Verfahren gemäss den Ansprüchen 2, 9, 18 und 21, dadurch gekennzeichnet, dass man zum Trichromiefärben eine Farbstoffmischung, enthaltend den gelben Farbstoff der Formel (4), den roten Farbstoff der Formel (5) und den blauen Farbstoff der Formel (6), (6a), (7) oder (7a) verwendet.

24. Verfahren gemäss einem der Ansprüche 1 bis 23, dadurch gekennzeichnet, dass man zusätzlich orangene Farbstoffe der Formel 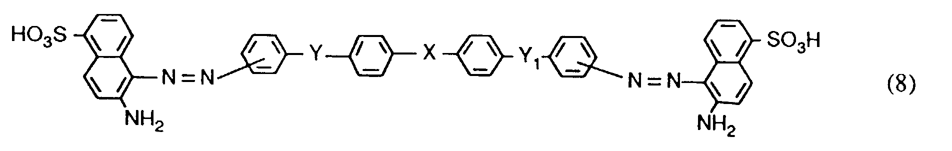 verwendet,worin Y und Y₁ unabhängig voneinander je -SO₂O-, -COO-, -CONH- oder -SO₂NH-,
X -C₁-C₄-Alkylen-, -CH=CH-, -O-, -S-, -SO₂-, -NH-, 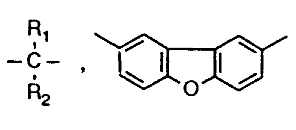 oder 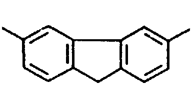 sind,
wobei R₁ und R₂ unabhängig voneinander je C₁-C₄-Alkyl bedeuten,
oder braune Farbstoffe der Formel 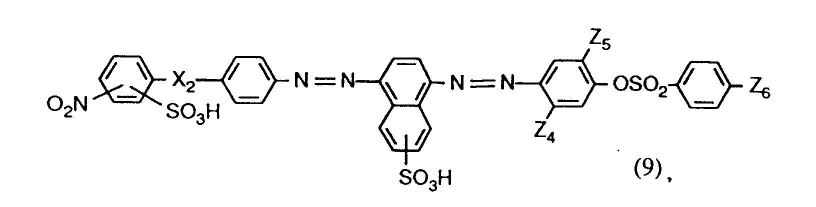 worin X₂ -NH- oder -O-, Z₄ und Z₅ unabhängig voneinander je Wasserstoff, Methyl, Methoxy oder Chlor und Z₆ Wasserstoff oder Methyl bedeutet, wobei die Sulfogruppe am Naphthalinkern in 6- oder 7-Stellung angeordnet ist,
oder braune Farbstoffe der Formel 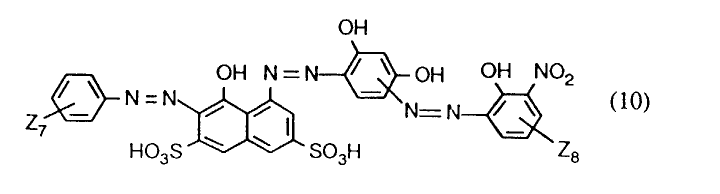 worin Z₇ Wasserstoff, Methyl, Chlor oder Nitro und Z₈ Nitro oder Sulfo bedeutet,
oder den braunen Farbstoff der Formel 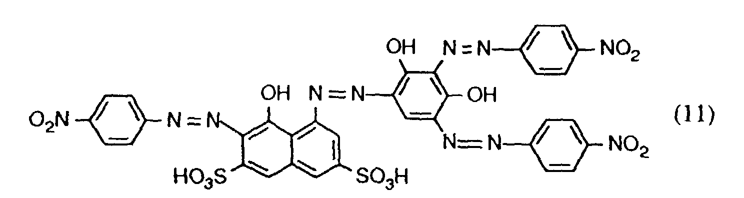 oder schwarze Farbstoffe der Formel 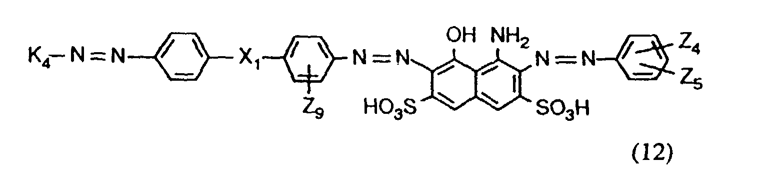 oder 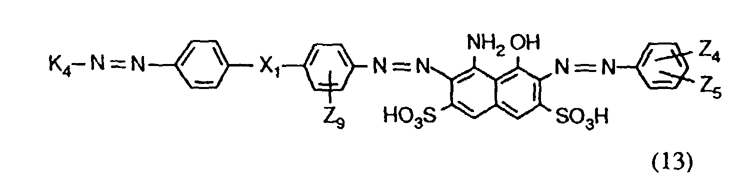 worin K₄ eine Kupplungskomponente der Formel 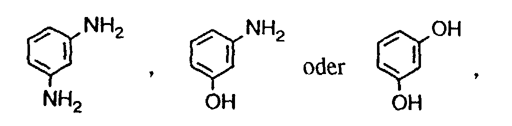
X₁ -NHSO₂-, -CH₂-, -NHCO-, -O-, -S-, -NH- oder -SO₂-,
Z₄ Wasserstoff, NO₂ oder Cl,
Z₅ Wasserstoff oder, falls Z₄ Cl ist, Wasserstoff oder Cl und
Z₉ Wasserstoff oder Sulfo bedeutet.

25. Verfahren gemäss Anspruch 24, dadurch gekennzeichnet, dass man zusätzlich den orangenen Farbstoff der Formel 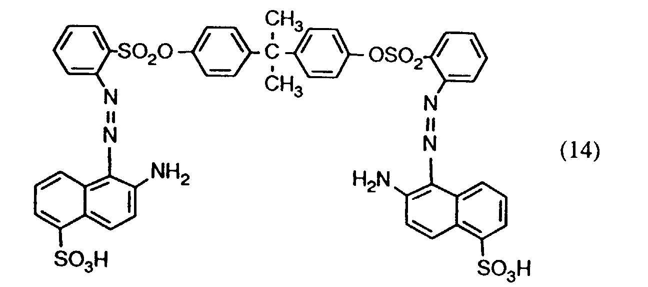 oder einen braunen Farbstoff der Formel 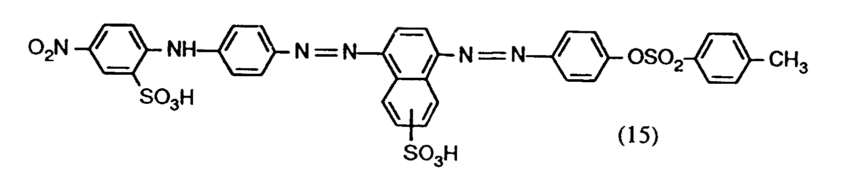 wobei die Sulfogruppe am Naphthalinkern in 6- oder 7-Stellung angeordnet ist,
oder den braunen Farbstoff der Formel 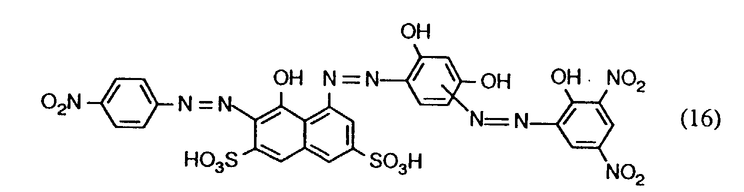 oder den braunen Farbstoff der Formel 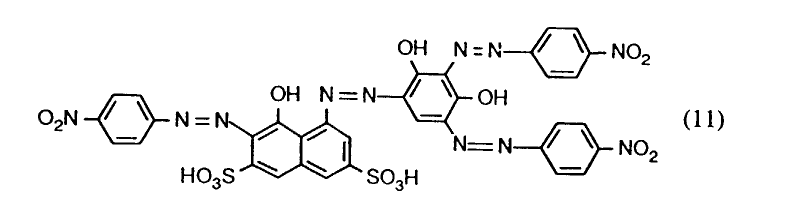 oder den braunen Farbstoff der Formel 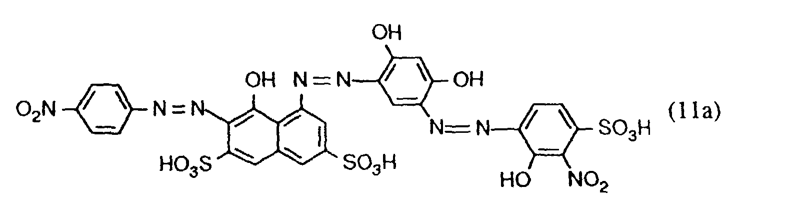 oder den schwarzen Farbstoff der Formel 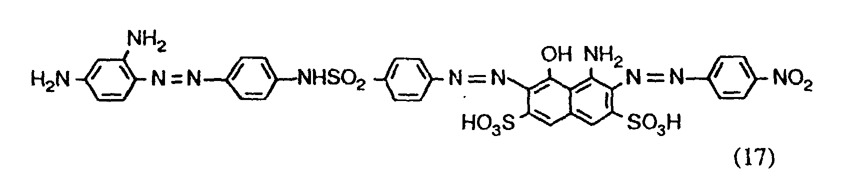 oder 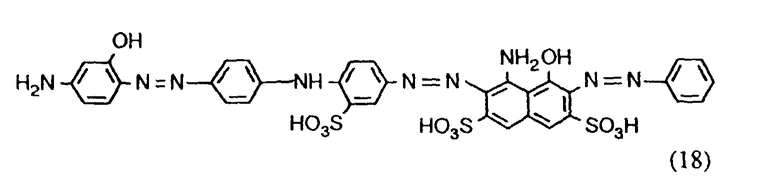 oder 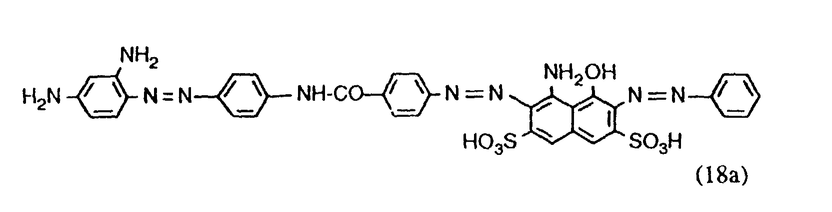 verwendet.

26. Verfahren gemäss einem der Ansprüche 1 bis 25, dadurch gekennzeichnet, dass man eine Färbeflotte verwendet, welche zusätzlich ein farbvertiefendes Hilfsmittel enthält.

27. Verfahren gemäss Anspruch 26, dadurch gekennzeichnet, dass man eine Färbeflotte verwendet, welche als farbvertiefendes Hilfsmittel ein ethoxyliertes Alkylamin enthält.

28. Das nach dem Verfahren gemäss den Ansprüchen 1 bis 27 gefärbte Leder.

29. Farbstofftrichromie-Mischungen, enthaltend mindestens einen gelben Farbstoff der Formel (1), mindestens einen roten Farbstoff der Formel (2) und mindestens einen blauen Farbstoff der Formel (3) oder (3a) gemäss Anspruch 1.

30. Farbstofftrichromie-Mischungen gemäss Anspruch 29, enthaltend 1 bis 98 Gew.% eines gelben Farbstoffes der Formel (1), 1 bis 98 Gew.% eines roten Farbstoffes der Formel (2) und 1 bis 98 Gew.% eines blauen Farbstoffes der Formel (3) oder (3a).

31. Farbstofftrichromie-Mischungen gemäss Anspruch 30, enthaltend 10 bis 70 Gew.% eines gelben Farbstoffes der Formel (1), 10 bis 50 Gew.% eines roten Farbstoffes der Formel (2) und 10 bis 50 Gew.% eines blauen Farbstoffes der Formel (3) oder (3a).

## Claims

1. A process for dyeing leather with dye mixtures, which comprises employing at least two metal-free dyes having in each case two sulfo or carboxyl groups and a molecular weight of between 790 and 1100, selected from the group consisting of
a) a yellow dye of the formula 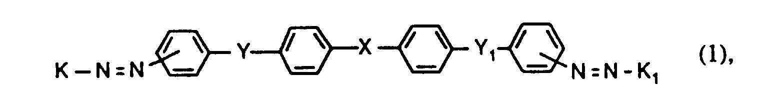 in which
Y and Y₁ independently of one another are each -SO₂O-, -COO-, -CONH- or -SO₂NH-,
X is -C₁-C₄alkylene, -CH=CH-, -O-, -S-, -SO₂-, -NH-, 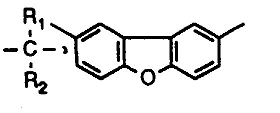 or 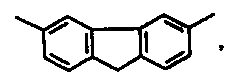
in which R₁ and R₂ independently of one another are each C₁-C₄alkyl, and
K and K₁ independently of one another are each a coupling component of the formula 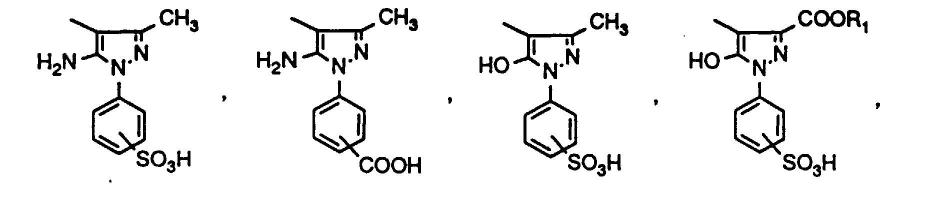 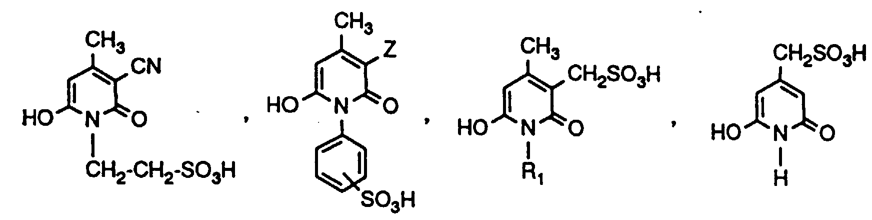 or 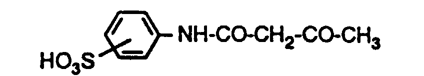 in which Z is CN, COOH, COONH₂ or COOR₁,
b) a red dye of the formula 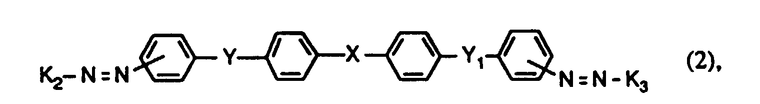 in which K₂ and K₃ independently of one another are each a coupling component of the formula 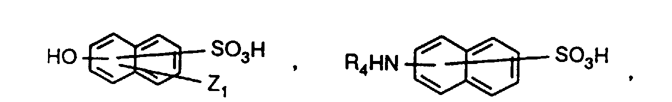 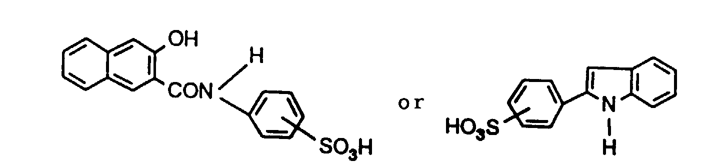 in which Z₁ is hydrogen, OH or NHR₃, in which R₃ is hydrogen, C₁-C₄alkyl, cyano-C₂-C₄alkyl, C₁-C₄alkylcarbonyl, aminocarbonyl, phenylcarbonyl or phenyl, it being possible for the phenyl group in the last two radicals mentioned to be substituted by C₁-C₄alkyl, and R₄ is hydrogen or phenyl,
and
c) a blue dye of the formula 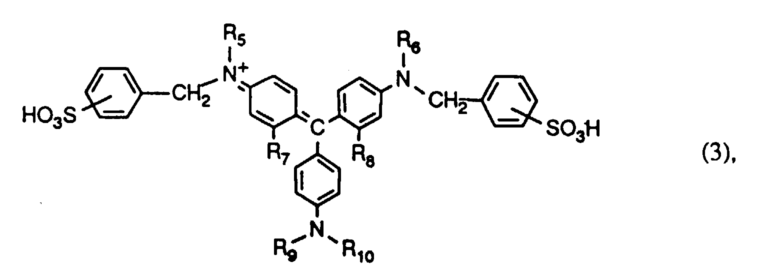 in which
R₅, R₆, R₇, R₈ and R₉ independently of one another are each hydrogen or C₁-C₄alkyl and
R₁₀ is hydrogen, phenyl or phenyl which is substituted by C₁-C₄alkyl or C₁-C₄alkoxy, or of the formula 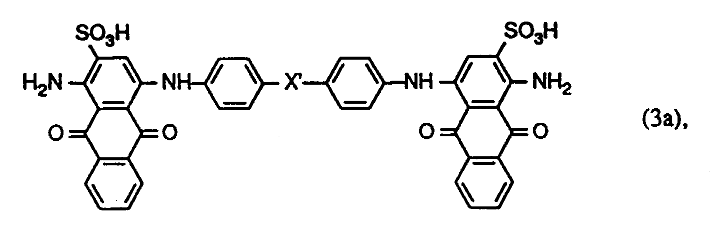 in which X' is -C₁-C₄alkylene-, -CH=CH-, -O-, -S-, -SO₂-, -NH-, 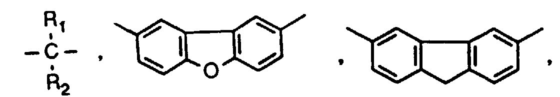 -NH-CO-, -NH-SO₂- or -NH-CO-NH-, in which R₁ and R₂ independently of one another are each C₁-C₄alkyl.

2. A process according to claim 1, wherein a dye mixture comprising a yellow dye of the formula (1), a red dye of the formula (2) and a blue dye of the formula (3) or (3a) is used for trichromatic dyeing.

3. A process according to one of claims 1 to 2, wherein a yellow dye of the formula (1) in which Y is identical to Y₁ is used.

4. A process according to any one of claims 1 to 3, wherein a yellow dye of the formula (1) in which Y and Y₁ are each -SO₂O- is used.

5. A process according to any one of claims 1 to 4, wherein a yellow dye of the formula (1) in which X is 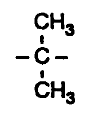 is used.

6. A process according to any one of claims 1 to 5, wherein a yellow dye of the formula (1) in which K is identical to K₁ is used.

7. A process according to any one of claims 1 to 6, wherein a yellow dye of the formula (1) in which K and K₁ are each a coupling component of the formula 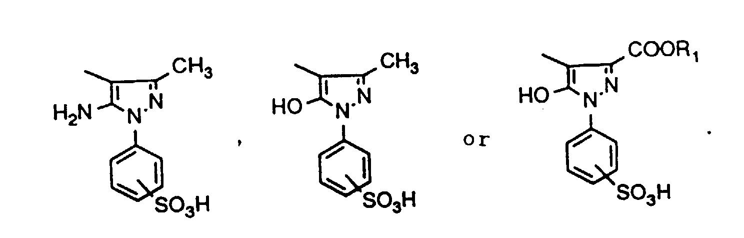 is used.

8. A process according to any one of claims 1 to 7, wherein a yellow dye of the formula (1) in which K and K₁ are each a coupling component of the formula 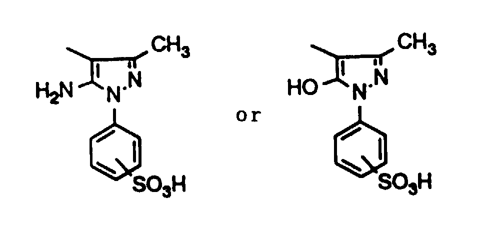 is used.

9. A process according to any one of claims 1 to 8, wherein the yellow dye of the formula 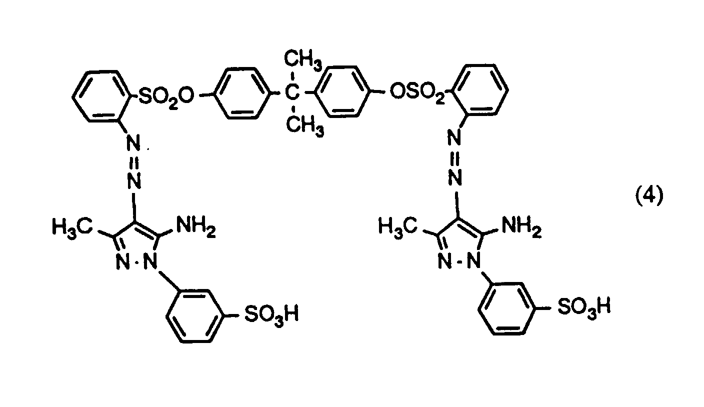 is used.

10. A process according to any one of claims 1 to 9, wherein a red dye of the formula (2) in which Y is identical to Y₁ is used.

11. A process according to claim 11, wherein a red dye of the formula (2) in which Y and Y₁ are each -SO₂O- is used.

12. A process according to any one of claims 1 to 11, wherein a red dye of the formula (2) in which X is 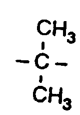 is used.

13. A process according to any one of claims 1 to 12, wherein a red dye of the formula (2) in which K₂ is identical to K₃ is used.

14. A process according to any one of claims 1 to 13, wherein a red dye of the formula (2) in which K₂ and K₃ are each a coupling component of the formula 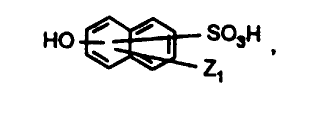 in which Z₁ is hydrogen, OH or NHR₃, in which R₃ is hydrogen, C₁-C₄alkyl, cyano-C₂-C₄alkyl, C₁-C₄alkylcarbonyl, aminocarbonyl, phenylcarbonyl or phenyl, it being possible for the phenyl group in the last two radicals mentioned to be substituted by C₁-C₄alkyl, is used.

15. A process according to claim 14, wherein a red dye of the formula (2) in which K₂ and K₃ are each a coupling component of the formula 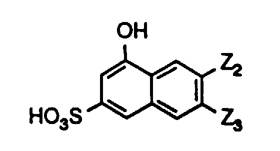 in which one of the substituents Z₂ and Z₃ is hydrogen and the other is NHR₃, in which R₃ is hydrogen, C₁-C₄alkyl, cyano-C₂-C₄alkyl, C₁-C₄alkylcarbonyl, aminocarbonyl, phenylcarbonyl or phenyl, it being possible for the phenyl group in the last two radicals mentioned to be substituted by C₁-C₄alkyl, is used.

16. A process according to claim 15, wherein a red dye of the formula (2) in which K₂ and K₃ are each a coupling component of the formula 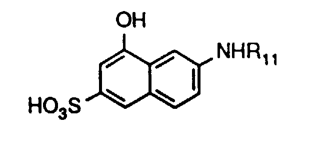 in which R₁₁ is hydrogen, C₁-C₄alkyl, cyano-C₂-C₄alkyl, C₁-C₄alkylcarbonyl, phenylcarbonyl, phenyl or phenyl which is substituted by C₁-C₄alkyl is used.

17. A process according to claim 15, wherein a red dye of the formula (2) in which K₂ and K₃ are each a coupling component of the formula 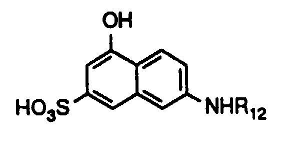 in which R₁₂ is hydrogen, C₁-C₄alkyl, aminocarbonyl, C₁-C₄alkylcarbonyl or phenylcarbonyl is used.

18. A process according to any one of claims 1 to 16, wherein the red dye of the formula 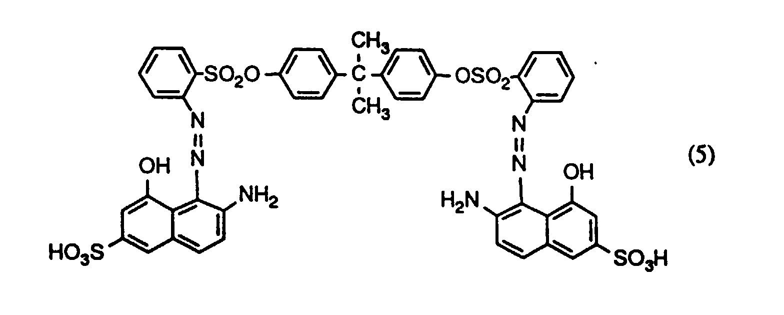 is used.

19. A process according to any one of claims 1 to 18, wherein a blue dye of the formula (3) in which R₅, R₆, R₇, R₈ and R₉ independently of one another are each hydrogen or C₁-C₂alkyl and R₁₀ is hydrogen, phenyl or phenyl which is substituted by C₁-C₂alkyl or C₁-C₂alkoxy, or of the formula (3a) in which X' is -C₁-C₄alkylene, -CH=CH-, 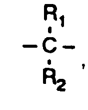 -NH-CO- or -NH-CO-NH-, in which R₁ and R₂ independently of one another are each C₁-C₄alkyl, is used.

20. A process according to claim 19, wherein a blue dye of the formula (3) in which R₅ and R₆ independently of one another are each C₁-C₂alkyl, R₇ and R₈ independently of one another are each hydrogen or C₁-C₂alkyl, R₉ is hydrogen and R₁₀ is phenyl or phenyl which is substituted by C₁-C₂alkyl or C₁-C₂alkoxy, or a blue dye of the formula (3a) in which X' is -C₁-C₄alkylene or , in which R₁ and R₂ independently of one another are each C₁-C₄alkyl, is used.

21. A process according to any one of claims 1 to 20, wherein the blue dye of the formula 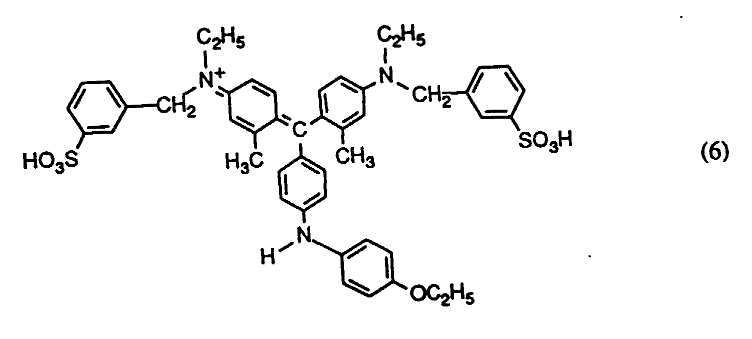 or of the formula 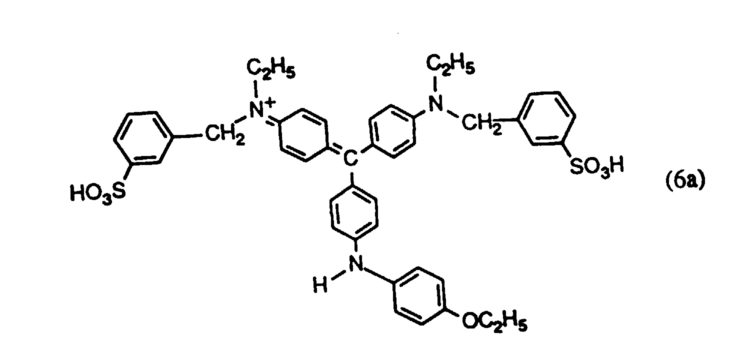 or of the formula 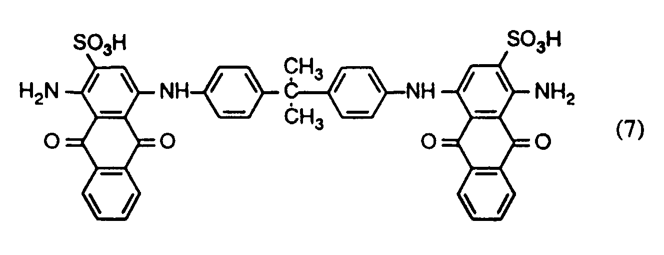 or of the formula 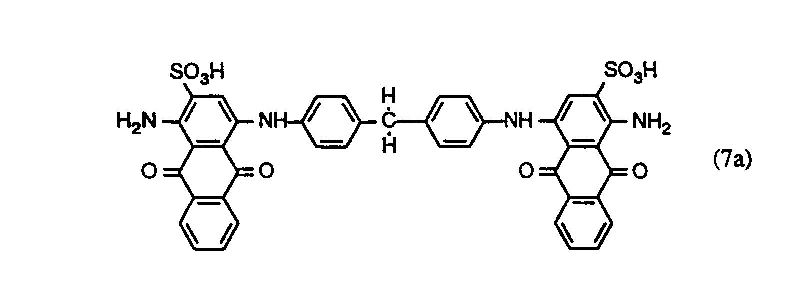 is used.

22. A process according to any one of claims 1 to 21, wherein at least two dyes, the parachor of which is between 1750 and 2200 and the log P of which is between -1 and 1, are used.

23. A process according to claims 2, 9, 18 and 21, wherein a dye mixture comprising the yellow dye of the formula (4), the red dye of the formula (5) and the blue dye of the formula (6), (6a), (7) or (7a) is used for trichromatic dyeing.

24. A process according to any one of claims 1 to 23, wherein orange-coloured dyes of the formula 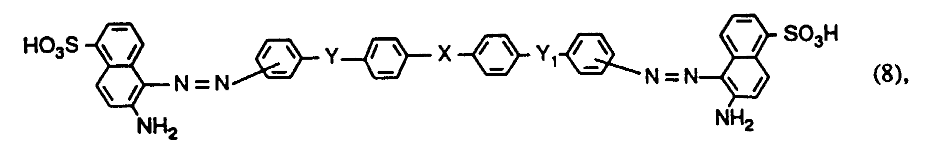 in which Y and Y₁ independently of one another are each -SO₂O-,-COO-, -CONH- or -SO₂NH-, and 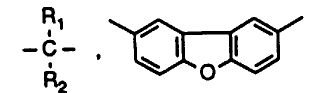 X is -C₁-C₄alkylene, -CH=CH-, -O-, -S-, -SO₂-, -NH-, or 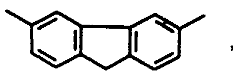 in which R₁ and R₂ independently of one
another are each C₁-C₄alkyl, or brown dyes of the formula 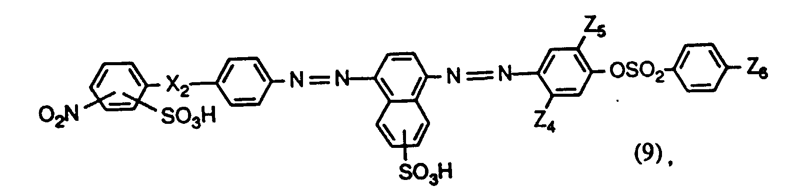 in which X₂ is -NH- or -O-, Z₄ and Z₅ independently of one another are each hydrogen, methyl, methoxy or chlorine and Z₆ is hydrogen or methyl, the sulfo group on the naphthalene nucleus being located in the 6- or 7-position,
or brown dyes of the formula 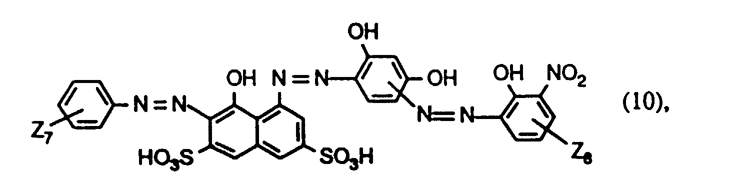 in which Z₇ is hydrogen, methyl, chlorine or nitro and Z₈ is nitro or sulfo,
or the brown dye of the formula 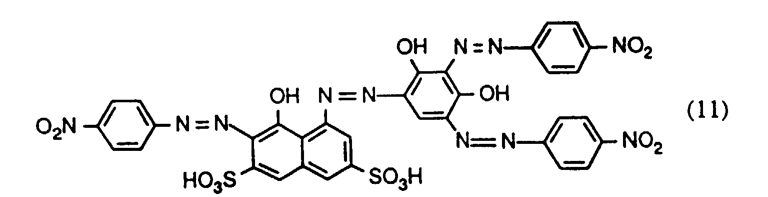 or black dyes of the formula 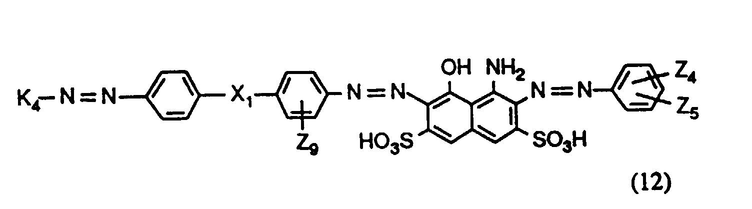 or 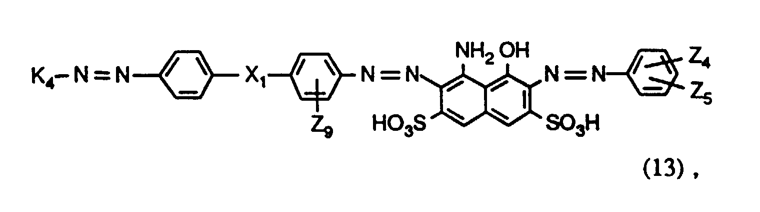 in which K₄ is a coupling component of the formula 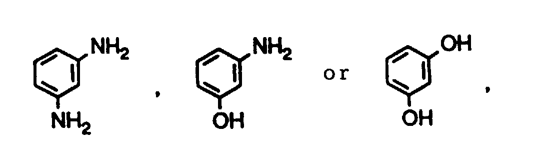
X₁ is -NHSO₂-, -CH₂-, -NHCO-, -O-, -S-, -NH- or -SO₂-,
Z₄ is hydrogen, NO₂ or Cl,
Z₅ is hydrogen or, if Z₄ is Cl, is hydrogen or Cl and
Z₉ is hydrogen or sulfo, are additionally used.

25. A process according to claim 24, wherein the orange-coloured dye of the formula 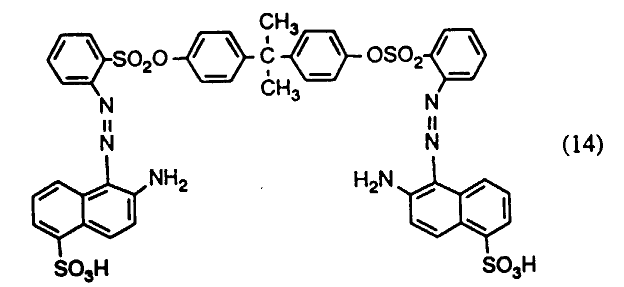 or a brown dye of the formula 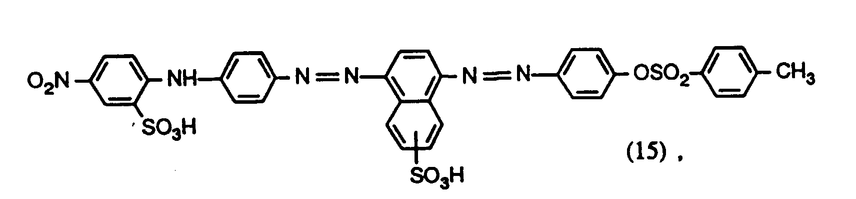 in which the sulfo group on the naphthalene nucleus is located in the 6- or 7-position,
or the brown dye of the formula 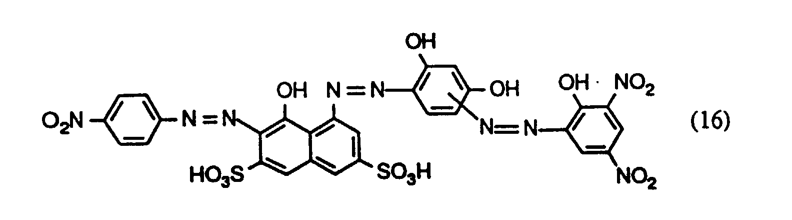 or the brown dye of the formula 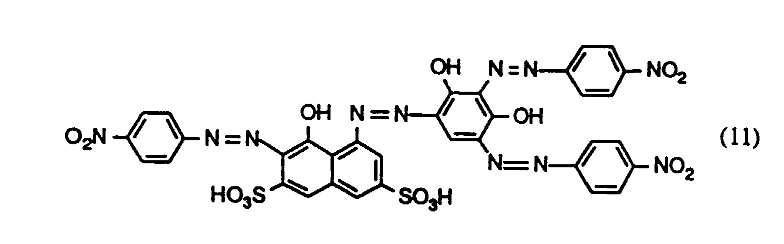 or the brown dye of the formula 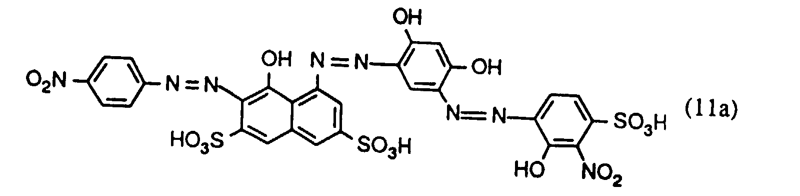 or the black dye of the formula 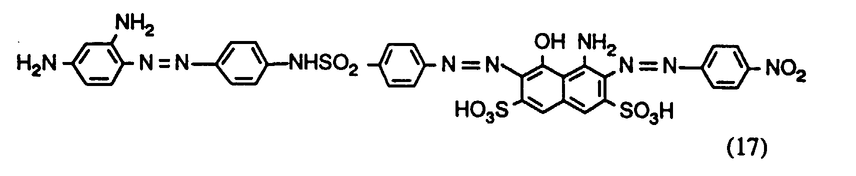 or 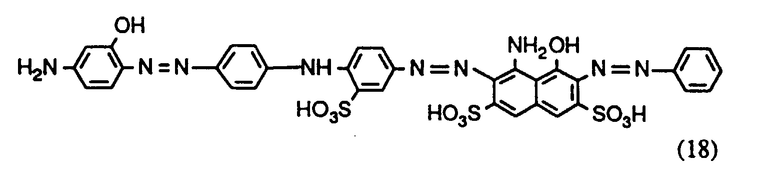 or 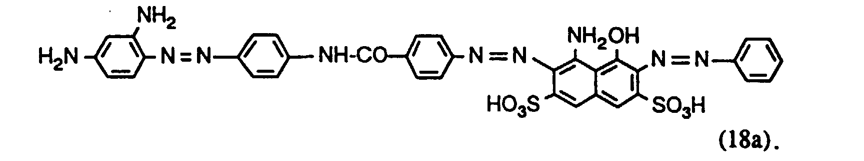 is additionally used.

26. A process according to any one of claims 1 to 25, wherein a dyeing liquor which additionally comprises a shade-deepening assistant is used.

27. A process according to claim 26, wherein a dyeing liquor which comprises an ethoxylated alkylamine as the shade-deepening assistant is used.

28. The leather dyed by the process according to claims 1 to 27.

29. A trichromatic dye mixture comprising at least one yellow dye of the formula (1), at least one red dye of the formula (2) and at least one blue dye of the formula (3) or (3a) according to claim 1.

30. A trichromatic dye mixture according to claim 29, comprising 1 to 98% by weight of a yellow dye of the formula (1), 1 to 98% by weight of a red dye of the formula (2) and 1 to 98% by weight of a blue dye of the formula (3) or (3a).

31. A trichromatic dye mixture according to claim 30, comprising 10 to 70% by weight of a yellow dye of the formula (1), 10 to 50% by weight of a red dye of the formula (2) and 10 to 50% by weight of a blue dye of the formula (3) or (3a).

## Revendications

1. Procédé pour la teinture du cuir avec des mélanges de colorants, caractérisé en ce que l'on utilise au moins deux colorants non métallifères comportant chacun deux groupes sulfo ou carboxy et ayant une masse moléculaire comprise entre 790 et 1100, choisis dans le groupe formé par
a) un colorant jaune de formule 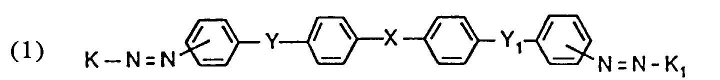 dans laquelle
Y et Y₁ représentent indépendamment l'un de l'autre chacun un groupe -SO₂O-, -COO-, -CONH- ou -SO₂NH-,
X représente un groupe alkylène en C₁₋₄, -CH=CH-, -O-, -S-, -SO₂-, -NH-, -C(R₁)(R₂)-, 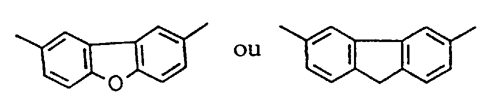 où R₁ et R₂ représentent indépendamment l'un de l'autre chacun un groupe alkyle en C₁₋₄, et K et K₁ représentent indépendamment l'un de l'autre un copulant de formule 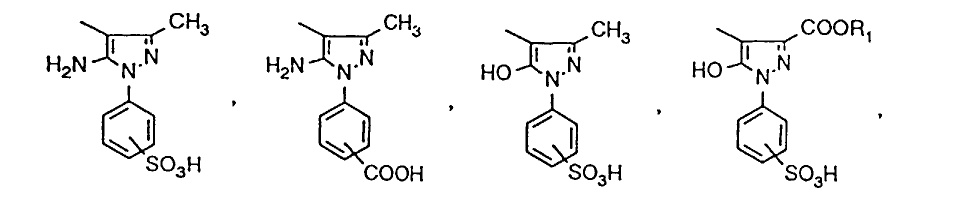 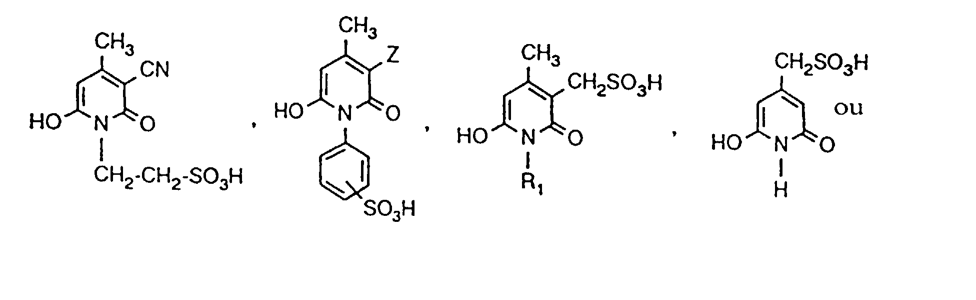 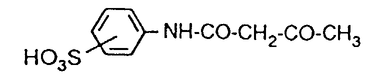 où Z représente un groupe CN, COOH, COONH₂, ou COOR₁,
b) un colorant rouge de formule 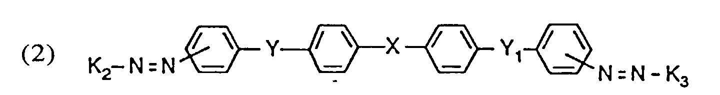 dans laquelle K₂ et K₃ représentent indépendamment l'un de l'autre chacun un copulant de formule 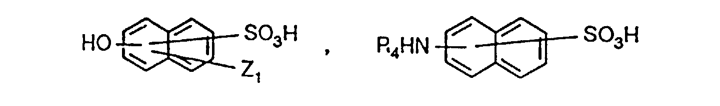 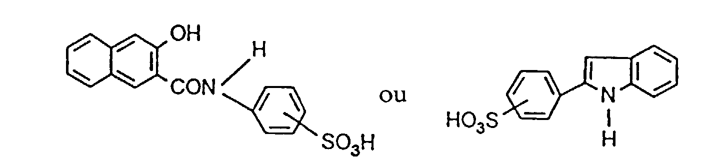 dans laquelle Z₁ représente un atome d'hydrogène ou un groupe OH ou NHR₃ où R₃ est un atome d'hydrogène, un groupe alkyle en C₁₋₄, cyano-(alkyle en C₂₋₄), (alkyle en C₁₋₄)-carbonyle, aminocarbonyle, phénylcarbonyle ou phényle, le groupe phényle des deux derniers résidus cités pouvant porter un ou plusieurs substituants alkyle en C₁₋₄, et
R₄ représente un atome d'hydrogène ou un résidu phényle, et
c) un colorant bleu de formule 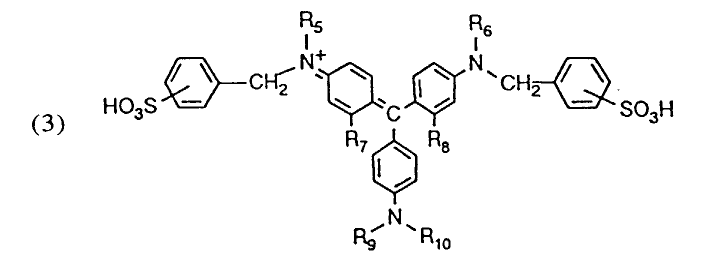 dans laquelle R₅, R₆, R₇, R₈ et R₉ représentent indépendamment l'un de l'autre chacun un atome d'hydrogène ou un groupe alkyle en C₁₋₄, et R₁₀ représente un atome d'hydrogène, un groupe phényle ou un groupe phényle portant un ou plusieurs substituants alkyle en C₁₋₄ ou alcoxy en C₁₋₄, ou de formule 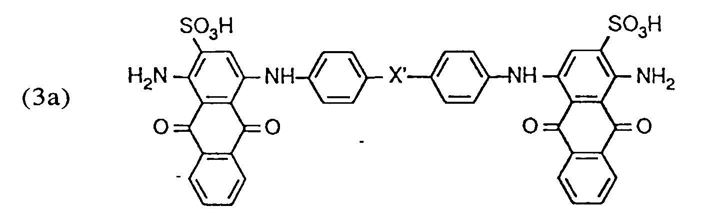 où X' représente un groupe alkylène en C₁₋₄, -CH=CH-, -O-, -S-, -SO₂-, -NH-, -C(R₁)(R₂)-, 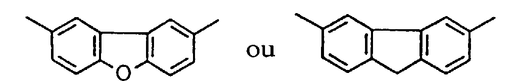 -NH-CO-, -NH-SO₂- ou -NH-CO-NH- où R₁ et R₂ représentent indépendamment chacun un groupe alkyle en C₁₋₄.

2. Procédé selon la revendication 1, caractérisé en ce que l'on utilise pour la teinture en trichromie un mélange de colorants contenant un colorant jaune de formule (1), un colorant rouge de formule (2) et un colorant bleu de formule (3) ou (3a).

3. Procédé selon la revendication 1 ou 2, caractérisé en ce que l'on utilise un colorant jaune de formule (1) dans lequel la signification de Y est identique à celle de Y₁.

4. Procédé selon l'une quelconque des revendications 1 à 3, caractérisé en ce que l'on utilise un colorant jaune de formule (1) dans lequel Y et Y₁ représentent chacun un groupe -SO₂O-.

5. Procédé selon l'une quelconque des revendications 1 à 4, caractérisé en ce que l'on utilise un colorant jaune de formule (1) dans lequel X représente un groupe -C(CH₃)₂-.

6. Procédé selon l'une quelconque des revendications 1 à 5, caractérisé en ce que l'on utilise un colorant jaune de formule (1) dans lequel K a la même signification que K₁.

7. Procédé selon l'une quelconque des revendications 1 à 6, caractérisé en ce que l'on utilise un colorant jaune de formule (1) dans lequel K et K₁ représentent chacun un copulant de formule

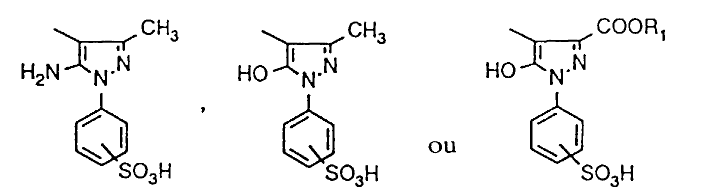

8. Procédé selon l'une quelconque des revendications 1 à 7, caractérisé en ce que l'on utilise un colorant jaune de formule (1) dans lequel K et K₁ représentent chacun un copulant de formule

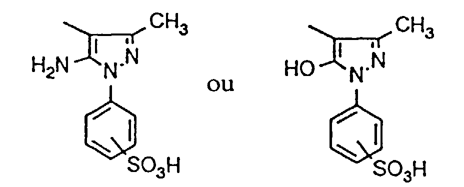

9. Procédé selon l'une quelconque des revendications 1 à 8, caractérisé en ce que l'on utilise un colorant jaune de formule

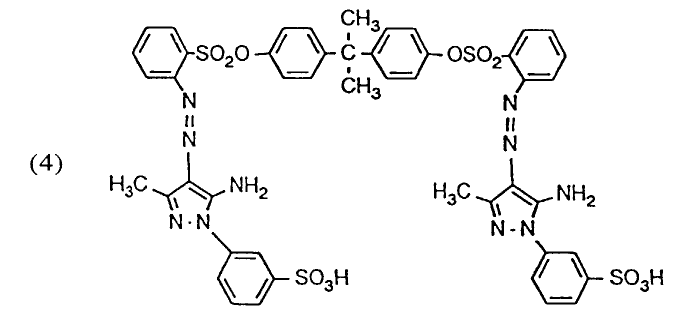

10. Procédé selon l'une quelconque des revendications 1 à 9, caractérisé en ce que l'on utilise un colorant rouge de formule (2) dans lequel Y et Y₁ ont la même signification.

11. Procédé selon l'une quelconque des revendications 1 à 10, caractérisé en ce que l'on utilise un colorant rouge de formule (2) dans lequel Y et Y₁ représentent chacun un groupe -SO₂O-.

12. Procédé selon l'une quelconque des revendications 1 à 11, caractérisé en ce que l'on utilise un colorant rouge de formule (2) dans lequel X représente un groupe -C(CH₃)₂-.

13. Procédé selon l'une quelconque des revendications 1 à 12, caractérisé en ce que l'on utilise un colorant rouge de formule (2) dans lequel K₂ a la même signfication que K₃.

14. Procédé selon l'une quelconque des revendications 1 à 13, caractérisé en ce que l'on utilise un colorant rouge de formule (2) dans lequel K₂ et K₃ représentent chacun un copulant de formule 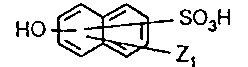 dans laquelle Z₁ représente un atome d'hydrogène, un groupe OH ou NHR₃ où R₃ est un atome d'hydrogène, un groupe alkyle en C₁₋₄, cyano-(alkyle en C₂₋₄), (alkyle en C₁₋₄)-carbonyle, aminocarbonyle, phénylcarbonyle ou phényle, le groupe phényle des deux derniers résidus cités pouvant porter un ou plusieurs substituants alkyle en C₁₋₄.

15. Procédé selon l'une quelconque des revendications 1 à 14, caractérisé en ce que l'on utilise un colorant rouge de formule (2) dans lequel K₂ et K₃ représentent chacun un copulant de formule 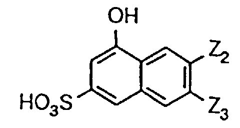 dans laquelle un des substituants Z₂ et Z₃ représente un atome d'hydrogène et l'autre un groupe NHR₃ où R₃ est un atome d'hydrogène, un groupe alkyle en C₁₋₄, cyano-(alkyle en C₂₋₄), (alkyle en C₁₋₄)-carbonyle, aminocarbonyle, phénylcarbonyle ou phényle, le groupe phényle des deux derniers résidus cités pouvant porter un ou plusieurs substituants alkyle en C₁₋₄.

16. Procédé selon l'une quelconque des revendications 1 à 15, caractérisé en ce que l'on utilise un colorant rouge de formule (2) dans lequel K₂ et K₃ représentent un copulant de formule 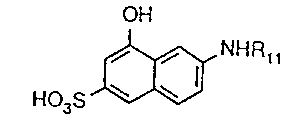 dans laquelle R₁₁ représente un atome d'hydrogène, un groupe alkyle en C₁₋₄, cyano-(alkyle en C₂₋₄), (alkyle en C₁₋₄)-carbonyle, phénylcarbonyle, phényle ou phényle portant un ou plusieurs substituants alkyle en C₁₋₄.

17. Procédé selon l'une quelconque des revendications 1 à 15, caractérisé en ce que l'on utilise un colorant rouge de formule (2) dans lequel K₂ et K₃ représentent chacun un copulant de formule 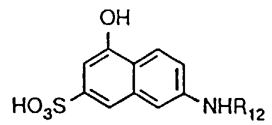 dans laquelle R₁₂ représente un atome d'hydrogène, un groupe alkyle en C₁₋₄, arninocarbonyle, -(alkyle en C₁₋₄)-carbonyle ou phénylcarbonyle.

18. Procédé selon l'une quelconque des revendications 1 à 16 caractérisé en ce que l'on utilise un colorant rouge de formule

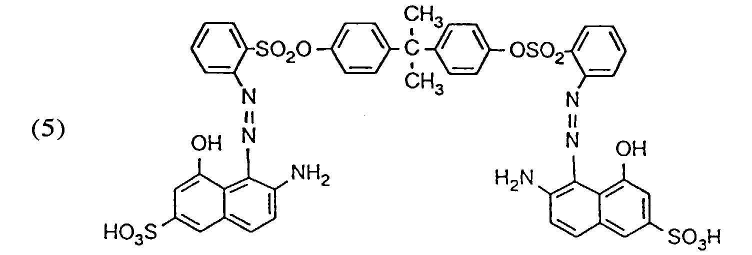

19. Procédé selon l'une quelconque des revendications 1 à 18, caractérisé en ce que l'on utilise un colorant bleu de formule (3) dans lequel R₅, R₆, R₇, R₈ et R₉ représentent indépendamment chacun un atome d'hydrogène ou un groupe alkyle en C₁₋₂, et R₁₀ représente un atome d'hydrogène, un groupe phényle ou un groupe phényle portant un ou plusieurs substituants alkyle en C₁₋₂ ou alcoxy en C₁₋₂, ou de formule (3a) dans laquelle X' représente un groupe alkylène en C₁₋₄, -CH=CH-, -C(R₁)(R₂)-, -NH-CO- ou -NH-CO-NH, où R₁ et R₂ représentent indépendamment l'un de l'autre chacun un groupe alkyle en C₁₋₄.

20. Procédé selon l'une quelconque des revendications 1 à 19, caractérisé en ce que l'on utilise un colorant bleu de formule (3) dans lequel R₅ et R₆ représentent indépendamment l'un de l'autre chacun un groupe alkyle en C₁₋₂, R₇ et R₈ représentent indépendamment l'un de l'autre un atome d'hydrogène ou un groupe alkyle en C₁₋₂, R₉ représente un atome d'hydrogène et R₁₀ représente un groupe phényle ou un groupe phényle portant un ou plusieurs substituants alkyle C₁₋₂ ou alcoxy en C₁₋₂, ou un colorant bleu de formule (3a) dans lequel X' représente un groupe alkylène en C₁₋₄ ou -C(R₁)(R₂)- où R₁ et R₂ représentent indépendamment l'un de l'autre chacun un groupe alkyle en C₁₋₄.

21. Procédé selon l'une quelconque des revendications 1 à 20, caractérisé en ce que l'on utilise un colorant bleu de formule 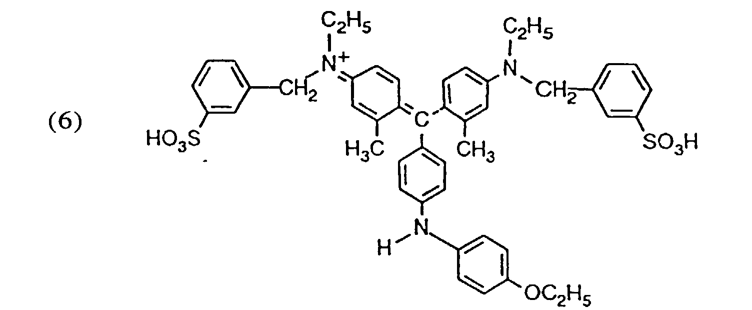 ou de formule 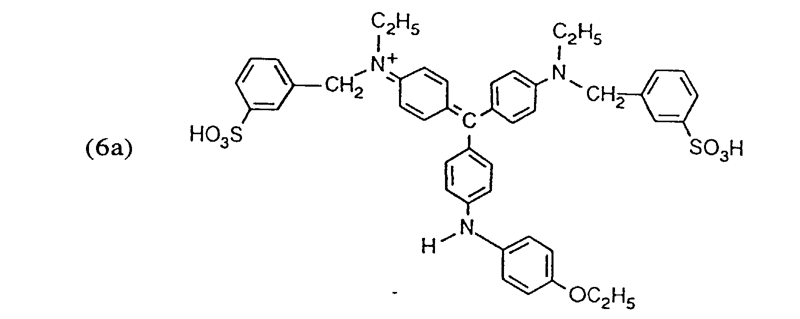 ou de formule 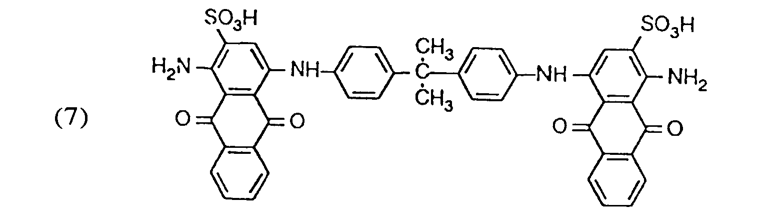 ou de formule

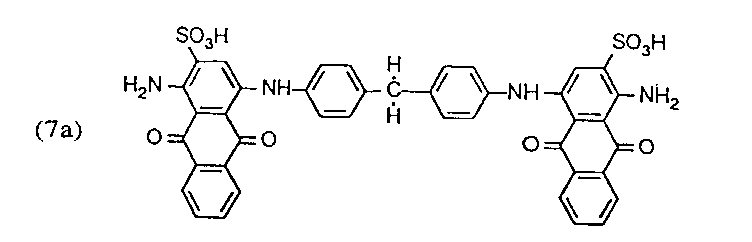

22. Procédé selon l'une quelconque des revendications 1 à 21, caractérisé en ce que l'on utilise au moins deux colorants ayant un parachor compris entre 1750 et 2200 et une valeur de log P comprise entre -1 et 1.

23. Procédé selon les revendications 2, 9, 18 et 21, caractérisé en ce que l'on utilise pour la teinture en trichromie un mélange de colorants contenant le colorant jaune de formule (4), le colorant rouge de formule (5) et le colorant bleu-de formule (6), (6a), (7) ou (7a).

24. Procédé selon l'une quelconque des revendications 1 à 23, caractérisé en ce que l'on utilise en outre des colorants oranges de formule 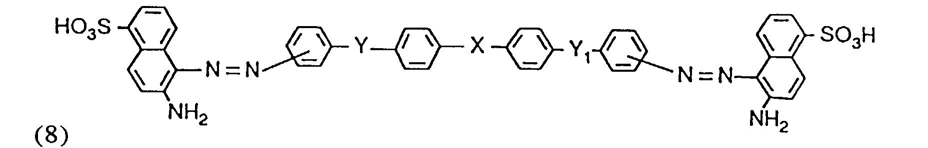 dans lesquels Y et Y₁ représentent indépendamment l'un de l'autre chacun un groupe -SO₂O-, -COO-, -CONH- ou -SO₂NH- et X représente un groupe alkylène en C₁₋₄, -CH=CH, -O-, -S-, -SO₂-, -NH-, -C(R₁)(R₂)- 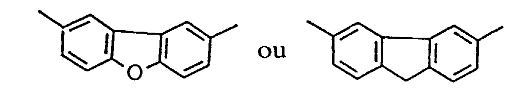 où R₁ et R₂ représentent indépendamment l'un de l'autre chacun un groupe alkyle en C₁₋₄,
ou les colorants marrons de formule 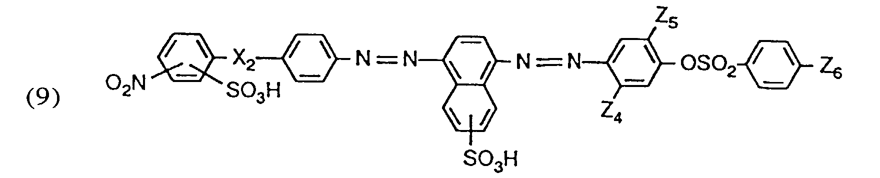 dans laquelle X₂ représente un groupe -NH- ou -O-, Z₄ et Z₅ représentent indépendamment l'un de l'autre un atome d'hydrogène, un groupe méthyle, méthoxy ou chloro et Z₆ représente un atome d'hydrogène ou un groupe méthyle, le groupe sulfo étant lié en position 6 ou 7 du noyau naphtalénique,
ou des colorants marrons de formule 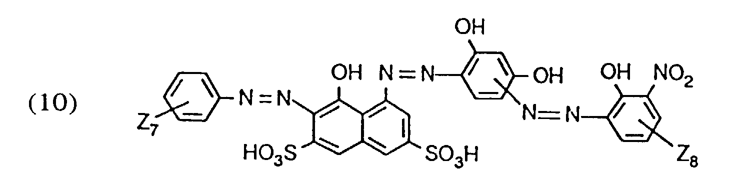 dans laquelle Z₇ représente un atome d'hydrogène, un groupe méthyle, un atome de chlore ou un groupe nitro et Z₈ représente un groupe nitro ou sulfo,
ou le colorant marron de formule 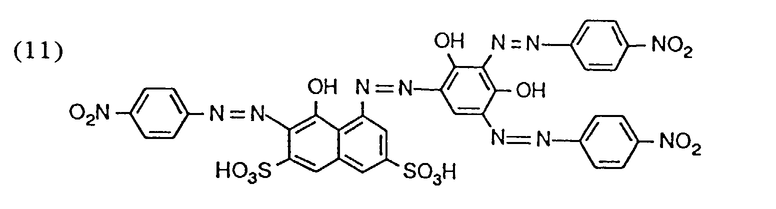 ou des colorants noirs de formule 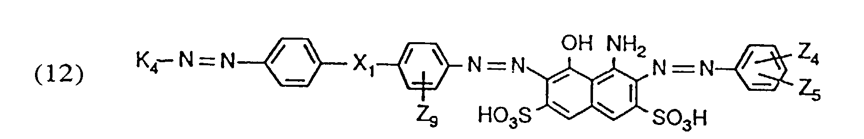 ou 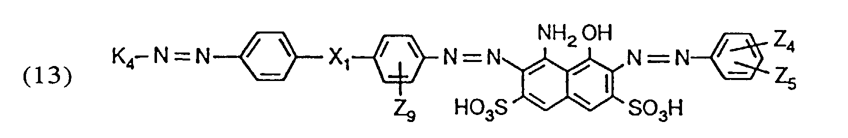 dans lesquelles
K₄ est un copulant de formule 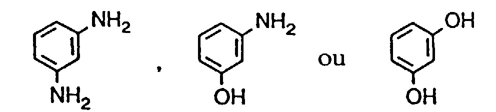
X₁ représente un groupe -NHSO₂-, -CH₂-, -NHCO-, -O-, -S-, -NH- ou -SO₂-,
Z₄ représente un atome d'hydrogène, un groupe NO₂ ou un atome de chlore,
Z₅ représente un atome d'hydrogène ou, lorsque Z₄ est un atome de chlore, un atome d'hydrogène ou de chlore, et
Z₉ représente un atome d'hydrogène ou un groupe sulfo.

25. Procédé selon la revendication 24, caractérisé en ce que l'on utilise en plus un colorant orange de formule 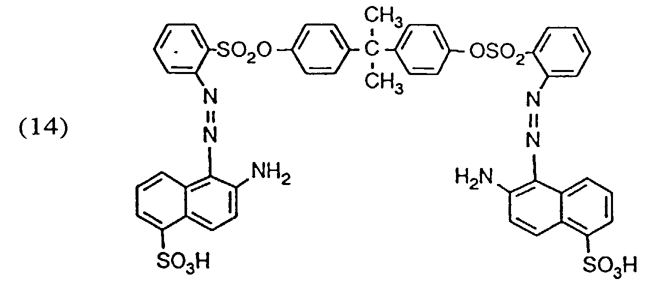 ou un colorant marron de formule 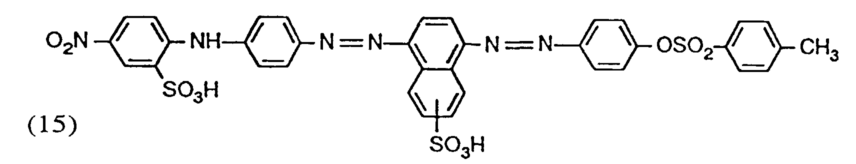 où le groupe sulfo est lié en position 6 ou 7 du noyau naphtalène, ou le colorant marron de formule 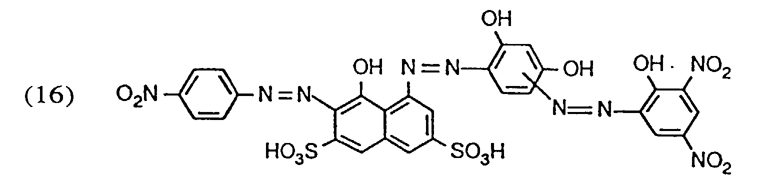 ou le colorant marron de formule 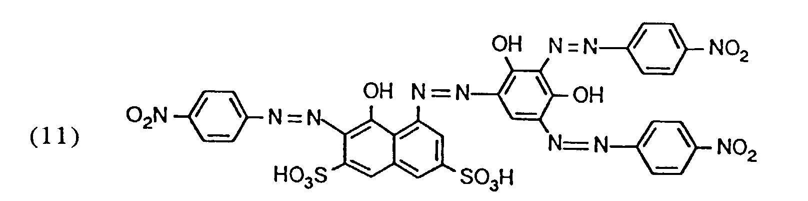 ou le colorant marron de formule 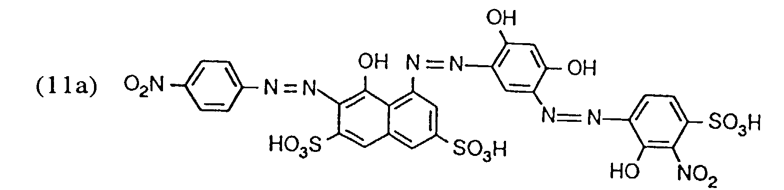 ou le colorant noir de formule 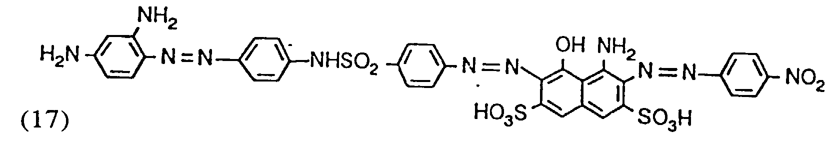 ou 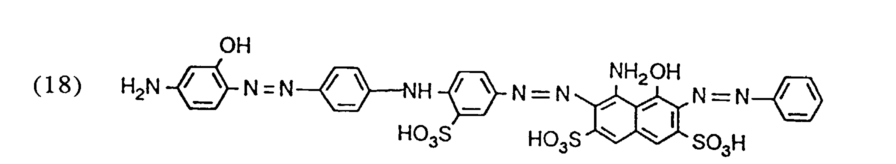 ou

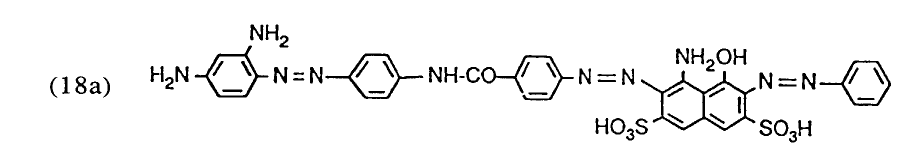

26. Procédé selon l'une quelconque des revendications 1 à 25, caractérisé en ce que l'on utilise un bain de teinture contenant en outre un agent de renforcement de la couleur.

27. Procédé selon la revendication 26, caractérisé en ce que l'on utilise un bain de teinture contenant comme agent de renforcement de la couleur une alkylamine éthoxylée.

28. Cuir teint selon le procédé des revendications 1 à 27.

29. Mélanges de colorants contenant au moins un colorant jaune de formule (1), au moins un colorant rouge de formule (2) et au moins un colorant bleu de formule (3) ou (3a) selon la revendication 1.

30. Mélanges de colorants selon la revendication 29 contenant de 1 à 98 % en poids d'un colorant jaune de formule (1), de 1 à 98 % en poids d'un colorant rouge de formule (2) et de 1 à 98 % en poids d'un colorant bleu de formule (3) ou (3a).

31. Mélanges de colorants selon la revendication 30 contenant de 10 à 70 % en poids d'un colorant jaune de formule (1), de 10 à 50 % en poids d'un colorant rouge de formule (2) et de 10 à 50 % en poids d'un colorant bleu de formule (3) ou (3a).
